(19) Europäisches Patentamt
European Patent Office
Office européen des brevets

(11) **EP 3 627 390 B1**

(12) **EUROPÄISCHE PATENTSCHRIFT**

(45) Veröffentlichungstag und Bekanntmachung des Hinweises auf die Patenterteilung:
**17.11.2021 Patentblatt 2021/46**

(51) Int Cl.:
***G06K 9/00*** *(2006.01)*

(21) Anmeldenummer: **19197773.5**

(22) Anmeldetag: **17.09.2019**

(54) **VORRICHTUNG ZUR OPTISCHEN DIREKTAUFNAHME VON HAUTABDRÜCKEN**

DEVICE FOR OPTICAL DIRECT RECORDING OF SKIN PRINTS

DISPOSITIF DE PRISE OPTIQUE DIRECTE D'EMPREINTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2018 DE 102018122917**

(43) Veröffentlichungstag der Anmeldung:
**25.03.2020 Patentblatt 2020/13**

(73) Patentinhaber: **JENETRIC GmbH**
**07745 Jena (DE)**

(72) Erfinder:
• **RIEHL, Philipp**
**07745 Jena (DE)**
• **REINHOLD, Jörg**
**07743 Jena (DE)**
• **HILLMANN, Jürgen**
**07745 Jena (DE)**

• **MICHALSKY, Tom**
**04277 Leipzig (DE)**
• **KRENZER, Daniel**
**99848 Wutha-Farnroda (DE)**
• **FEMEL, Holger**
**07751 Rothenstein (DE)**
• **JÄHNE, Wolfgang**
**07751 Rothenstein (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
**WO-A1-2016/154378    US-A1- 2012 321 149**
**US-A1- 2017 249 494    US-A1- 2017 351 901**
**US-A1- 2018 005 005**

**Beschreibung**

Die Erfindung betrifft eine Vorrichtung zur optischen Direktaufnahme von Hautabdrücken, insbesondere zur Aufnahme von Papillarlinien von Mehrfinger- oder Handabdrücken.

Der Stand der Technik kennt einerseits Systeme, die der Verifikation biometrischer Merkmale dienen, bei denen eine Übereinstimmung mit abgespeicherten Merkmalen vorliegen muss, beispielsweise um eine Zugangskontrolle für definierte Sperrbereiche zu ermöglichen.

Andere Systeme dienen der Identifikation durch den Abgleich mit Vergleichsdatenbanken, beispielsweise Pass- und Visa-Erstellung, Personenidentitätsfeststellung bei Grenzkontrollen, insbesondere an Flughäfen, oder bei der erkennungsdienstlichen Erfassung durch die Polizei. Die Anforderungen hinsichtlich Qualität, Auflösung und Originaltreue der aufgenommenen Bilder der Hautabdrücke sind bei den letztgenannten Systemen sehr umfangreich.

Nicht zuletzt aufgrund hoher Anforderungen durch mit erkennungsdienstlichen Maßnahmen betraute Organisationen, wie beispielsweise das Federal Bureau of Investigation (FBI) der USA, gibt es bei diesen Systemen ein hohes Maß an Standardisierung, um einerseits eine möglichst zweifelsfreie Erkennung zu sichern und andererseits Datensätze, die mit verschiedenen Systemen aufgenommen wurden, vergleichbar zu machen.

Zur Erfüllung dieser Anforderungskriterien wird ein qualitativ hochwertiges Systemdesign benötigt. Bei einem optischen System bedeutet das beispielsweise, dass nicht nur der Aufnahmesensor bzw. die Aufnahmesensoren den Anforderungen genügen müssen, sondern auch die Beleuchtung und alle anderen für die Bilderzeugung notwendigen Komponenten, vor allem dann, wenn große Hautflächen, also mehr als ein Finger (zum Beispiel eine komplette Hand), gleichzeitig aufgenommen werden soll.

Für die Erfassung von Finger- und Handabdrücken, welche die genannten hohen Qualitätsanforderungen erfüllen, werden derzeit unterschiedliche Systeme verwendet.

Zum einen kommen kapazitive, semi-transparente TFT-Sensoren zum Einsatz, bei denen eine Nutzerführung durch ein Display unterhalb des Sensors realisiert werden kann. Das Lesen von sicherheitsrelevanten Dokumenten, wie z. B. Pässen, Führerscheinen, Tickets, Bordkarten etc., ist dabei allerdings nicht möglich, sodass ein separates Gerät oder zumindest eine zusätzliche optische Sensorschicht notwendig wäre, die aber die Gerätekosten in die Höhe treiben würde.

Zum anderen drängen Geräte auf den Markt, die eine optische Direktabtastung der Hautabdrücke realisieren, d.h. bei denen das aufzunehmende Objekt (Finger, Vierfinger oder Hand) auf eine Auflagefläche direkt über dem lichtempfindlichen Sensorarray aufgelegt wird, ohne dass optisch abbildende Systeme, wie makroskopische Linsen, Prismen, abbildende Gitter etc., zum Einsatz kommen. Diese Systeme können zudem die Aufnahme von Hautabdrücken mit den Vorteilen einer visuellen Nutzerführung sowie einer optischen Aufnahme von Dokumenten an derselben Auflagefläche verbinden, indem optische semi-transparente TFT-Sensoren verwendet werden.

Ein Schichtsystem eines Smartphones mit Fingerbardrucksensor wird in US 2017/351901 A1 (KIM JAEMIN [KR] ET AL) offenbart. Der entscheidende Nachteil des Systems ist jedoch, dass keine homogene Ausleuchtung der Deckschicht über sämtliche Lichtauskoppelstrukturen gesichert ist und es ist dadurch nicht möglich einen deutlich engeren Einfallswinkelbereich des an der Auflagefläche der Deckschicht auftreffenden Lichts bereitzustellen, der für die gesamte Auflagefläche so vorgegeben werden kann, dass das in die Deckschicht eintretende Licht entlang der gesamten Grenzfläche zu Luft in gleichem Maße total reflektiert wird.

Ein System, bei dem hierzu ein Display unter dem optischen Sensor positioniert wird, ist bereits aus der DE 10 2015 115 484 B3 bekannt. Dort fungiert das Display gleichzeitig als Beleuchtung bzw. wird als Hintergrundbeleuchtung verwendet, so wird das aufliegende Objekt diffus, also ungerichtet beleuchtet. Das vom Objekt zurückgestreute Licht wird anschließend von den lichtempfindlichen Elementen eines Sensors detektiert. Hierbei ist die Dicke der Deckschicht zwischen der Auflagefläche und den lichtempfindlichen Elementen auf wenige Mikrometer beschränkt, da Auflösung und Kontrast mit zunehmender Entfernung zwischen Sensor und Auflagefläche schnell abnehmen.

Dennoch sind auch verschiedene Lösungen bekannt, die bei gleicher Bildqualität eine größere Dicke der Deckschicht ermöglichen bzw. erfordern.

Dazu wird einerseits das Beleuchtungslicht der Hintergrundbeleuchtung kollimiert, wie bei verschiedenen Ausführungen aus der US 2018/0121701 A1 (WO 2017/118030 A1) bekannt. Nachteilig erweist sich dabei allerdings, dass zusätzliche optische Elemente zwischen Beleuchtung und Auflagefläche integriert werden müssen, um die gewünschte Lichtformung zu realisieren. Diese zusätzliche Schicht erhöht die Dicke der gesamten Vorrichtung, ist teuer und komplex in der Herstellung.

In ähnlicher Weise ist in der US 2018/0165497 A1 beschrieben worden, in einen Flachbildschirm einen optischen Bildsensor einzubetten, der einen Fingerabdrucksensor enthalten kann. Der Aufbau umfasst einen Anzeigebildschirm mit einem Anzeige- und einem Nichtanzeigebereich, eine Lichtleiteinrichtung, die mit übereinstimmender Länge und Breite auf dem Anzeigebildschirm anliegt und aus zwei mit einer niedrigbrechenden Klebstoffschicht verbundenen Deckplatten besteht, wobei die Lichteinkopplung außerhalb der Displayschicht des Flachbildschirms erfolgt, durch eine lichtbrechende Schicht unterhalb der Displayschicht unter einem Winkel zwischen 70° und 75° in die untere Deckplatte eingekoppelt und in dieser totalreflektiert weitergeleitet werden.

Ein Anteil dieses totalreflektierten Lichts wird an der lichtbrechenden Schicht unter einem kleineren Winkel in die obere Deckplatte eingekoppelt und an der äußeren Grenzschicht zur Luft als interne Totalreflexion (TIR - Total Internal Reflection) in Richtung des Displays zurückgeworfen, wobei es durch die niedrigbrechende Schicht transmittieren und auch die untere Deckplatte ohne Reflexion passieren kann. Da das Display ein AMOLED (active matrix organic light-emitting diode) ist, kann es auch als Sensorschicht genutzt werden. Damit kann eine Detektion von Fingerabdrücken und - durch Nutzung von IR-Licht - von Venen vorgenommen werden.

Nachteilig ist die punktuelle seitliche Einkopplung des Lichts über ein Beugungsgitter, wofür eine Laserquelle erforderlich ist, um benötigte Lichtintensitäten in einen Lichtleiter einzukoppeln. Dadurch erfolgt die Ausleuchtung im Lichtleiter lediglich in einer dreieckigen Fläche. Außerdem ist die Lichtauskopplung aus dem Lichtleiter über die üblichen Streuzentren, wie beispielsweise in der US 2018/0128957 A1 beschrieben, als Beleuchtung zur hochwertigen Fingerabdruckaufnahme, die den FBI-Standards genügt, dadurch beschränkt, dass der Anteil von Beleuchtungsstrahlen für das TIR-Prinzip eher unzureichend klein ist.

Der Erfindung liegt die Aufgabe zugrunde, eine neue Möglichkeit zur optischen Direktaufnahme von Hautabdrücken menschlicher Autopodien zu finden, die bei hohen Anforderungen der Personenidentifikation nach FBI-Standard eine Anzeigeschicht zur Nutzerführung direkt unterhalb der Auflagefläche zulässt, ohne dass insbesondere die örtliche Auflösung der Fingerabdruckbilder abnimmt.

Erfindungsgemäß wird die Aufgabe bei einer Vorrichtung zur optischen Direktaufnahme von Hautabdrücken, mit einem Schichtkörper, der eine Auflagefläche, die durch eine Deckschicht des Schichtkörpers gebildet ist, sowie eine Sensorschicht und eine Lichtquelleneinheit enthält, wobei die Sensorschicht in einem Sensorraster angeordnete lichtempfindliche Elemente und transparente Bereiche aufweist, dadurch gelöst, dass die Lichtquelleneinheit als Lichtleiterschicht ausgebildet und unterhalb der Sensorschicht angeordnet ist, wobei die Lichtleiterschicht an einer Schmalseite eine Lichteinkopplung mittels LED aufweist, dass die Lichtleiterschicht mit Lichtauskoppelstrukturen versehen ist, die auf Basis eines Neigungswinkels der Lichtauskoppelstrukturen und auf Basis von Unterschieden der Brechungsindizes zwischen den Nachbarschichten der Lichtleiterschicht bis zur Deckschicht eine gerichtete Lichtauskopplung aus der Lichtleiterschicht unter einem definierten Winkel, der nach Durchlaufen aller Schichten bis zur Deckschicht an der Auflagefläche beim Übergang zu Luft zu interner Totalreflexion (TIR) führt, sowie mit einem kleinen Divergenzwinkelbereich von ≤ +/-15° gestatten, um eine hohe örtliche Auflösung des aufzunehmenden Hautabdrucks zu erreichen, dass zwischen Deckschicht und Sensorschicht eine erste Adhäsionsschicht sowie zwischen Sensorschicht und Lichtleiterschicht eine zweite Adhäsionsschicht vorhanden sind, wobei die zweite Adhäsionsschicht einen Brechungsindex aufweist, der mindestens 1 % und höchstens 30 % kleiner als die Brechungsindizes der Lichtleiterschicht und der Sensorschicht ist, deren Brechungsindizes zwischen 1,45 und 1,8 liegen, und die erste Adhäsionsschicht einen Brechungsindex aufweist, der mindestens so groß ist wie derjenige der zweiten Adhäsionsschicht.

Vorteilhaft weist die LED-Lichteinkopplung eine der LED nachgeordnete Vorkollimationsoptik an der Schmalseite der Lichtleiterschicht auf, mit der in dem jeweils in die Lichtleiterschicht eingekoppelten Strahlenbündel eine horizontale Divergenz zwischen 2,5° und 30° eingestellt ist, um eine verbesserte Auflösung des aufzunehmenden Hautabdrucks zu erreichen.

Dabei ist die Vorkollimationsoptik zweckmäßig ein refraktives optisches Element, das an der Schmalseite der Lichtleiterschicht angeordnet und vorzugsweise in Form einer konvexen oder GRIN-Linse an der Schmalseite der Lichtleiterschicht eingearbeitet ist. In einer anderen bevorzugten Ausführung ist die Vorkollimationsoptik innerhalb der Lichtleiterschicht in Form einer konkaven Linse aus einem Medium mit gegenüber der Lichtleiterschicht niedrigerem Brechungsindex ausgebildet.

Zweckmäßig ist eine Vielzahl von eng benachbarten LEDs entlang einer Schmalseite der Lichtleiterschicht angeordnet, sodass deren Strahlenbündel aufgrund der horizontalen Divergenz nach einer definierten Einkoppellänge eine angeglichene Lichtintensität in der Lichtleiterschicht bewirken.

Es erweist sich für die Lichteinkopplung weiterhin als vorteilhaft, dass eine Eckenlichteinkopplung mit mindestens einer LED an wenigstens einer durch Einkürzung einer Ecke der Lichtleiterschicht vorhandenen Schmalseite angeordnet ist, wobei ein Intensitätsabfall des in die Lichtleiterschicht eingekoppelten divergenten Strahlenbündels durch einen wachsenden Füllfaktor aus Größe und Dichte der Lichtauskoppelstrukturen kompensiert ist. Dabei ist zweckmäßig eine Streuscheibe zwischen LED und Schmalseite der eingekürzten Ecke der Lichtleiterschicht zur Gleichverteilung des eingekoppelten Lichts in alle Raumwinkel angeordnet, sodass kein Lichtabfall an der eingekürzten Ecke benachbarten Schmalseiten der Lichtleiterschicht kompensiert werden muss.

Es erweist sich des Weiteren als vorteilhaft, dass der Brechungsindex der ersten Adhäsionsschicht genauso groß ist wie der Brechungsindex der zweiten Adhäsionsschicht, sodass ein Anteil von Störlicht, der infolge von durch Umgebungslicht erzeugter Anregung aus den auf der Auflagefläche aufliegenden Hautbereichen austritt, aufgrund von TIR innerhalb der Deckschicht von einer Ausbreitung in Richtung der Sensorschicht ausgeblendet wird.

Der Schichtkörper weist bevorzugt ein Display zur Darstellung von Nutzerinformationen auf, das unterhalb des Lichtleiters angelegt ist, wobei das Display ein LCD, OLED, QLED etc. sein kann. Dabei kann das Display an der Unterseite der Lichtleiterschicht entweder abnehmbar ohne Klebstoffschicht oder mittels einer weiteren niedrigbrechenden Adhäsionsschicht mit einem Brechungsindex, der höchstens so groß ist wie derjenige der zweiten Adhäsionsschicht, befestigt sein, damit Streulicht oder an der Rückseite der Sensorschicht reflektiertes Licht vom Display absorbiert werden kann. Dadurch ist die Lichtleiterschicht unabhängiger von dem Reflexionsanteil der Sensorschicht und kann stets gleiche Lichtauskoppelstrukturen aufweisen. Des Weiteren wird der Schichtkörper durch die Verklebung des massiven Displays mechanisch stabiler.

Außerdem kann das Display als zusätzliche Leuchtschicht zur Beleuchtung von Dokumenten eingesetzt werden, um zusätzlich zu der durch Restdivergenz vom TIR-Winkelbereich bereitgestellten Beleuchtung der Lichtleiterschicht Licht für die Dokumentenbeleuchtung zur Verfügung zu stellen.

Die Lichteinkopplung enthält zweckmäßig mehrere mit einem Mittenabstand zwischen 1 mm und 10 mm dicht gepackte LEDs, die so definiert vorkollimiert sind, dass nach einer Einkoppellänge von mindestens 2 mm die LEDs überlappende Lichtabstrahlungskegel aufweisen, um eine homogene Ausleuchtung zu erzeugen. Der Mittenabstand der LEDs beträgt bevorzugt 3-6 mm mit vorzugsweise einer Halbwertsbreite (FWHM) der Abstrahlung von 10° bzw. einer Divergenz von $\leq$ +/-5°, wobei die Einkoppellänge bevorzugt 2-20 mm beträgt.

In einer speziellen Ausführung der Erfindung sind die Lichtauskoppelstrukturen vorteilhaft so ausgebildet, dass nur zwischen 50% und 95% des aus der Lichtleiterschicht ausgekoppelten Beleuchtungslichts beim Übergang zu Luft an der Auflagefläche in der Deckschicht totalreflektierter Lichtanteil sind, während ein verbleibender restlicher Lichtanteil zur Beleuchtung von Dokumenten nutzbar ist.

Zweckmäßig weist Lichtleiterschicht einen Füllfaktor der Lichtauskoppelstrukturen auf, gebildet durch Größe und Abstände der Lichtauskoppelstrukturen, der für jede Stelle der Lichtleiterschicht mindestens so groß ist, dass die Lichtauskoppelstrukturen in einem aufzunehmenden Abdruckbild von Hautbereichen nicht sichtbar sind. Dabei weisen die Lichtauskoppelstrukturen vorzugsweise einen Abstand s auf, der sehr viel kleiner ist als eine resultierende Strahldivergenz der Lichtauskoppelstrukturen der Lichtleiterschicht. Des Weiteren weist die Lichtleiterschicht eine hohe Transparenz auf, sodass die Trübung weniger als 20 % beträgt.

In einer weiteren vorteilhaften Gestaltung ist unter der transparenten Lichtleiterschicht eine weitere transparente Lichtleiterschicht angebracht und mit dieser durch eine weitere Adhäsionsschicht, die einen niedrigen Brechungsindex wie die erste und zweite Adhäsionsschicht aufweist, verbunden.

Dabei erweist sich eine erste Variante als zweckmäßig, bei der die Lichtleiterschicht und die weitere Lichtleiterschicht die Lichteinkopplung an gegenüberliegenden Schmalseiten des Schichtkörpers aufweisen, um auf die weitere Lichtleiterschicht zurückzugreifen, falls das mit der primären Lichtleiterschicht aufgenommene Bild eines Hautbereiches qualitativ schlecht ist (Defektspalten, Pixel, nasser Finger, trockener Finger, ...), wofür ein zweites mit der weiteren Lichtleiterschicht aufgenommenes Bild, das zum ersten Bild verschoben ist, einzeln verwendet oder mit dem ersten Bild (unter Berücksichtigung eines vorhandenen Versatzes) fusioniert werden kann.

In einer zweiten vorteilhaften Variante kann die Lichtleiterschicht und die weitere Lichtleiterschicht die Lichteinkopplung an derselben Schmalseite des Schichtkörpers haben und Lichtauskoppelstrukturen mit gleicher Ausrichtung aufweisen, wobei die Lichtleiterschicht und die weitere Lichtleiterschicht Lichtauskoppelstrukturen mit derart unterschiedlichen Neigungswinkeln $\varepsilon$ aufweisen können, soweit diese unterschiedlichen Neigungswinkel $\varepsilon$ jeweils Beleuchtungswinkel $\beta$ erzeugen, die an der Auflagefläche zu Totalreflexion führen. Dies ist für die Effizienz des Systems interessant, wenn beide Lichtleiterschichten quasi-parallel betrieben werden und das Licht aber an unterschiedlichen Stellen auskoppelt, wodurch höhere Lichtintensitäten zur Beleuchtung des aufliegenden Hautbereichs möglich sind. Weitere Lichtleiterschichten mit entsprechenden LED-Arrays z. B. zur Beleuchtung bestimmter begrenzter Bereiche sind ebenfalls vorteilhaft realisierbar, z. B. um Dokument und Finger gleichzeitig zu beleuchten.

Die Erfindung basiert auf der Grundüberlegung, dass beim Zusammenführen der Funktionen von Fingerabdruckaufnahme und Dokumentenaufnahme in einem Gerät, das darüber hinaus auch Anzeigefunktionen zur Nutzerführung in der Auflagefläche implementieren soll, in der Regel die Lichtintensität der Hautabdrücke unzureichend wird oder die Auflösung und der Kontrast der Aufnahmen nicht mehr dem geforderten FBI-Standard entspricht. Die Erfindung löst diese Probleme, indem eine Lichtleiterschicht unterhalb einer semitransparenten Sensorschicht angeordnet ist und an einer Schmalseite der Lichtleiterschicht die Lichteinkopplung mittels LED erfolgt, wobei die Lichtleiterschicht mit Lichtauskoppelstrukturen versehen ist, die auf Basis des Neigungswinkels der Lichtauskoppelstrukturen und der Brechzahlunterschiede zwischen den Nachbarschichten der Lichtleiterschicht bis zur Deckschicht eine gerichtete Lichtauskopplung unter einem definierten Winkel, der an der Auflagefläche beim Übergang zu Luft zur TIR mit einem kleinen Divergenzwinkelbereich von $\leq$ +/-15° führt, um eine hohe örtliche Auflösung des aufzunehmenden Hautabdrucks zu erreichen. Durch zur Lichtleiterschicht angepasste Brechungsindizes der Adhäsionsschichten und Nachbarschichten kann die Lichtauskopplung gezielt weiter verbessert werden.

Mit der Erfindung ist es möglich, Hautabdrücke menschlicher Autopodien mittels eines optischen Direktscanners mit hoher Qualität nach FBI-Standards aufzunehmen und außerdem Informationen zur Nutzerführung mittels eines Displays unterhalb der Auflagefläche und der Sensorfläche anzuzeigen, ohne dass dabei eine Verschlechterung der örtlichen Auflösung der Hautabdruckbilder einhergeht.

Die Erfindung soll nachstehend anhand von Ausführungsbeispielen näher erläutert werden. Die Zeichnungen zeigen:

Fig. 1:      eine prinzipielle Ausführung der erfindungsgemäßen Vorrichtung mit einem Schichtkörper, enthaltend eine Deckschicht mit Auflagefläche für aufzunehmende Objekte, eine Sensorschicht und eine Lichtleiterschicht als Lichtquelle,

Fig. 2:      eine vorteilhafte Ausführung der Erfindung mit einem Display zur Nutzerführung, das unterhalb des in Fig. 1 gezeigten Aufbaus angeordnet ist, wobei über den Sensorelementen eine zusätzliche Blendenschicht zur Verminderung des Lichteinfalls von mehreren Querorten auf ein und dasselbe Sensorelement vorhanden ist,

Fig. 3a:      einen Ausschnitt des Schichtkörpers mit speziellen Lichtauskoppelstrukturen an der Unterseite der Lichtleiterschicht zur Auskopplung von Strahlenbündeln, die die Auflagefläche unter einem Totalreflexionswinkel erreichen,

Fig. 3b:      einen Ausschnitt des Schichtkörpers mit speziellen Lichtauskoppelstrukturen an der Oberseite der Lichtleiterschicht zur Auskopplung von Strahlenbündeln, die die Auflagefläche unter einem Totalreflexionswinkel erreichen,

Fig. 3c:      zwei Abschnitte der Lichtleiterschicht mit unterschiedlich geformten Lichtauskoppelstrukturen der Lichtleiterschicht von Fig. 3b in einer Draufsicht, bei der die Lichtauskoppelstrukturen in Richtung des Lichteinfalls ansteigende Vierecksflächen, wie z. B. Trapeze, Rechtecke, sind,

Fig. 4a:      einen Ausschnitt des Schichtkörpers gemäß der Ausführung von Fig. 3a mit einer vergrößerten keilförmigen Lichtauskoppelstruktur und Darstellung eines repräsentativen Strahlenverlaufs, der an der Lichtauskoppelstruktur zur Auflagefläche hin ausgekoppelt wird und letztere unter einem Totalreflexionswinkel erreicht,

Fig. 4b:      eine zu Fig. 4a erstellte Darstellung des Lichtleitwinkels des in der Lichtleiterschicht geführten Lichts über dem Neigungswinkel der keilförmigen Struktur, um die Abhängigkeit des Strahlverlaufs durch die Grenzflächen des Schichtkörpers aufgrund unterschiedlichen Brechungsverhaltens als Zustandsdiagramm aufzuzeigen,

Fig. 5:      einen Ausschnitt des Schichtkörpers gemäß Fig. 1 mit aufgelegtem Finger unter Einwirkung von Umgebungslicht (Sonne), das bei dieser Ausführung innerhalb der Deckschicht durch Totalreflexion von den Sensorelementen der Sensorschicht ferngehalten, d.h. ausgeblendet wird,

Fig. 6:      eine besondere Ausführungsform der erfindungsgemäßen Vorrichtung, bei der unterhalb der Sensorschicht zwei Lichtleiterschichten unmittelbar übereinander und oberhalb eines darunter angeordneten Displays vorhanden sind,

Fig. 7:      eine weitere vorteilhafte Ausführungsform der Erfindung, die eine zusätzliche Spektralfilterschicht über der Sensorschicht und eine zusätzliche Substratschicht zwischen Sensorschicht und Lichtleiterschicht aufweist,

Fig. 8:      eine besonders vorteilhafte Ausführungsform der Erfindung, bei der infolge von Lichtauskoppelstrukturen mit angepassten Neigungswinkeln für TIR-Aufnahmen von Hautabdrücken und angepassten Neigungswinkeln zur Aufnahme von Dokumenten eine Aufnahme der beiden unterschiedlichen Objektarten möglich ist,

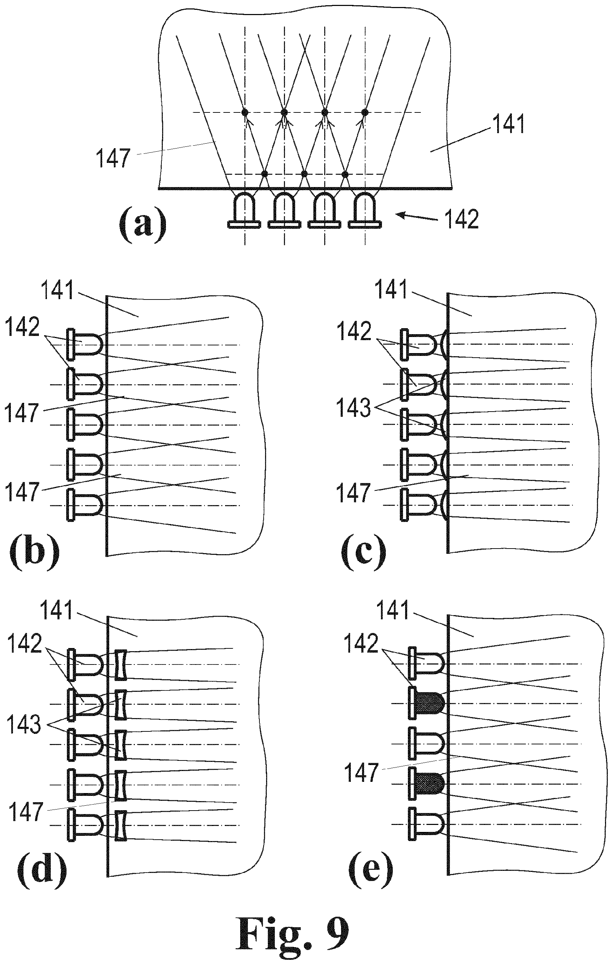

Fig. 9:      mehrere vorteilhafte Ausführungsformen der Lichteinkopplung in die Lichtleiterschicht der erfindungsgemäßen Vorrichtung, bei denen an einer Schmalseite der Lichtleiterschicht (a) unkollimierte LEDs eingekoppel sind, wobei jeder Objektpunkt mehrere Bildpunkte erzeugt, (b) herstellerseitig vorkollimierte LEDs unmittelbar einstrahlen, (c) LEDs mit einer zwischengeordneten Vorkollimationsoptik einkoppeln, (d) LEDs über in der Lichtleiterschicht eingebettete Vorkollimationsoptiken einstrahlen und (e) LEDs unterschiedlicher Wellenlängen zur alternativen spektralen Beleuchtung abwechselnd angeordnet sind,

Fig. 10:      eine Darstellung von dicht gepackten, vorkollimiert eingekoppelten LEDs zur Erläuterung der erreichbaren Beleuchtungshomogenität in Abhängigkeit von Mittenabstand der LEDs und Einkoppellängen der Strahlenbündel,

Fig. 11:      mehrere vorteilhafte Ausführungsformen der Lichteinkopplung in die Lichtleiterschicht der erfindungsgemäßen Vorrichtung, bei denen an einer eingekürzten Ecke der Lichtleiterschicht eine Eckenbeleuchtung (a) mit einer unkollimierten LED realisiert ist, wobei jeder Objektpunkt (in horizontaler Richtung) genau einen Bildpunkt erzeugt, (b) zwei LEDs mit dazwischen angeordneter Streuscheibe und (c) mit einer unkollimierten LED, wobei die eingekürzte Ecke der Lichtleiterschicht eine angepasst gekrümmte Einkopplungsfläche aufweist.

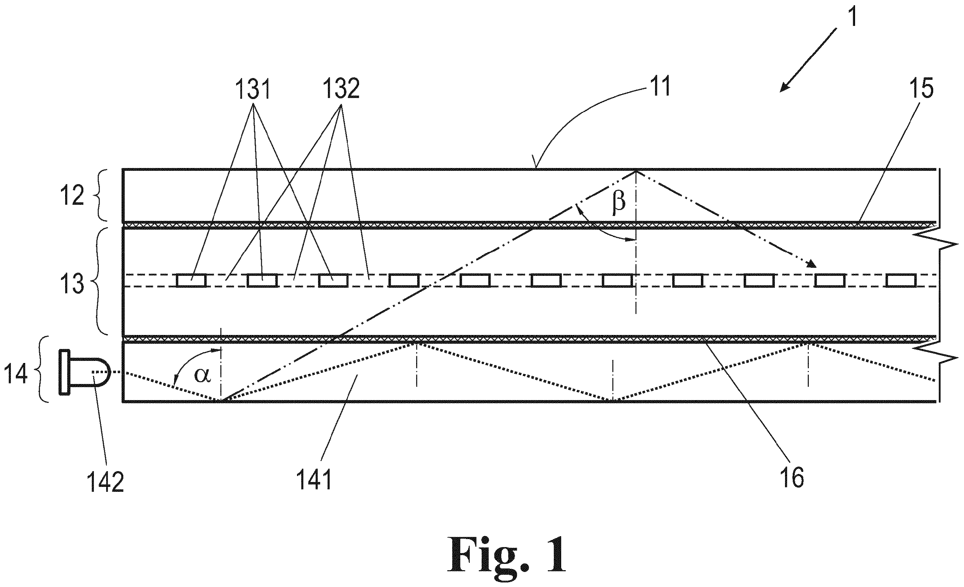

Die erfindungsgemäße Vorrichtung umfasst in einem Grundaufbau - wie in Fig. 1 dargestellt - einen Schichtkörper 1 der beginnend von einer Auflagefläche 11 für die aufzunehmenden Objekte (Finger 2 oder Dokument 3, nicht gezeichnet) eine Deckschicht 12, deren äußere Oberfläche die Auflagefläche 11 bereitstellt, eine Sensorschicht 13 mit lichtempfindlichen Sensorelementen 131, die eine definierte Teiltransparenz für das Licht der darunter liegenden flächigen Lichtquelleneinheit 14, die in Form einer Lichtleiterschicht 141 ausgebildet ist und an der an wenigstens einer Schmalseite eine oder mehrere LEDs 142 als Lichtquellen aufweist, die zur Einkopplung von mehr oder weniger gut vorkollimiertem Licht vorgesehen sind. Zwischen der Deckschicht 12 des Schichtkörpers 1 und der Sensorschicht 13 ist eine Klebstoffschicht in Form einer ersten Adhäsionsschicht 15 und zwischen Sensorschicht 13 und Lichtleiterschicht 141 ist eine zweite Adhäsionsschicht 16 als Klebstoffschicht eingebracht. Dabei weist die zweite Adhäsionsschicht 16 einen Brechungsindex auf, der mindestens 1 % und höchstens 30 % kleiner als die Brechungsindizes der Lichtleiterschicht 141 und der Sensorschicht 13 ist, wobei deren Brechungsindizes zwischen 1,45 und 1,8 liegen, und die erste Adhäsionsschicht 15 weist einen Brechungsindex auf, der mindestens so groß ist wie derjenige der zweiten Adhäsionsschicht 16.

Das von der(n) LED 142 abgestrahlte Licht wird aufgrund der Lichtleitereigenschaften der Lichtleiterschicht 141 unter einem Lichtleitwinkel $\alpha$ weitergeleitet. Wegen der noch weiter unten detailliert erläuterten Lichtauskoppelstrukturen 144 der Lichtleiterschicht 141 werden Anteile des in der Lichtleiterschicht 141 mit dem Lichtleitwinkel $\alpha$ propagierenden Lichts unter einem definierten Winkel so ausgekoppelt, dass nach Durchlaufen aller Schichten des Schichtkörpers 1 bis zur Deckschicht 12 an der Auflagefläche 11 beim Übergang zu Luft ein Beleuchtungswinkel $\beta$ für interne Totalreflexion (TIR) eingestellt ist, wobei die Lichtauskoppelstrukturen 141 eine Auskopplung von Lichtstrahlen mit einem kleinen Divergenzwinkelbereich von $\leq$ +/-15° gestatten, um eine hohe örtliche Auflösung des aufzunehmenden Hautabdrucks zu erreichen.

Es sei an dieser Stelle erwähnt, dass die oben definieren Brechungsindizes, die geringfügig von dem der Lichtleiterschicht 141 abweichen sollen, genau dann ihre Bedeutung verlieren, wenn die Dicke der Adhäsionsschichten sich der Größenordnung der verwendeten Lichtwellenlänge annähern. In jenem speziellen Fall nimmt das Licht die Adhäsionsschichten nicht wahr und es gelten die Brechungsindizes der darauffolgenden Schichten, welche die Lichtbrechung beziehungsweise Totalreflexion definieren.

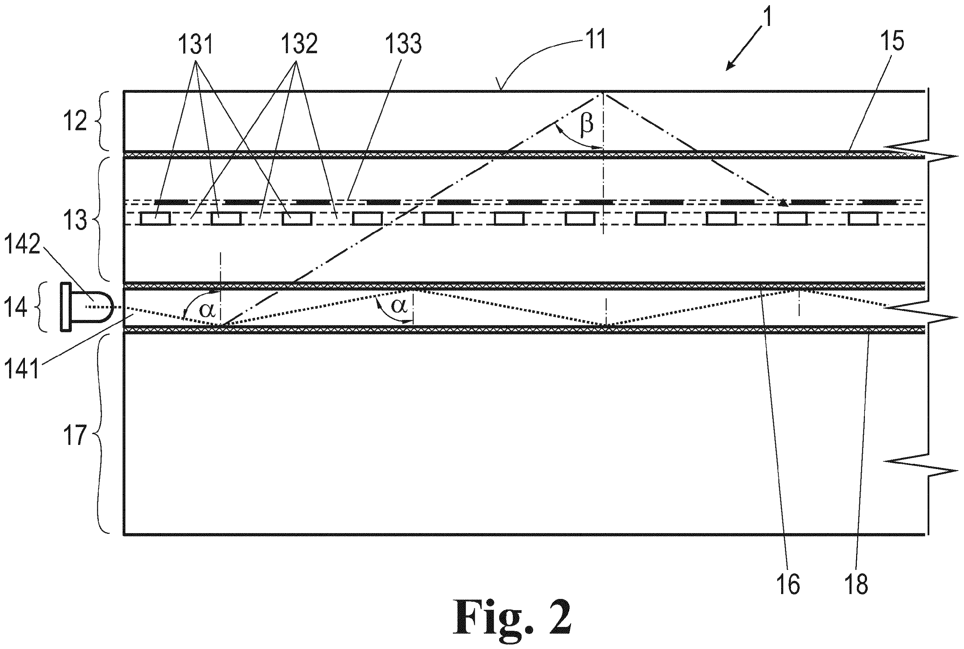

In Fig. 2 ist eine gegenüber Fig. 1 erweiterte Ausführung der Vorrichtung gezeigt, die unterhalb der Lichtleiterschicht 141 ein Display 17 aufweist. Das Display 17 kann an der Lichtleiterschicht 141 entweder abnehmbar (ohne Klebstoffschicht) angeklemmt, eingespannt oder auf andere ähnliche Weise befestigt sein. Gezeigt ist jedoch in Fig. 2 eine Ausführung mit einer weiteren Adhäsionsschicht 18, die einen mit der zweiten Adhäsionsschicht 16 vergleichbar niedrigen Brechungsindex aufweist und die das Display 17 mit der Lichtleiterschicht 141 dauerhaft verklebt.

Die Adhäsionsschichten 15, 16, 18 sind für mindestens Anteile von Beleuchtungslicht aus der Lichtleiterschicht 141 und eines optionalen unter der Lichtleiterschicht 141 anliegenden Displays 17 transparent. Hierbei kann es sich um ein optisch transparentes doppelseitig haftenden Klebeband (OCA) oder einen flüssigen Klebstoff, der beispielsweise über Wärme oder UV-Strahlung ausgehärtet wurde, handeln (LOCA). Diese Klebstoffe können zum Beispiel Silikone, Acrylat, Epoxide sein.

Als Lichtleiterschicht 141 kommen Polycarbonat (PC), Polymethylmethacrylat (PMMA), Glas oder andere optisch transparente Werkstoffe mit einem Brechungsindex n ~ 1,5 zum Einsatz. Es können aber auch weitere Materialien mit einem Brechungsindex zwischen 1,45 und 2,0 als Lichtleiterschicht 141 zum Einsatz kommen. Der lichtleitende Effekt an den Stellen der Lichtleiterschicht 141 ohne Lichtauskoppelstrukturen 144 wird durch den Unterschied der Brechungsindizes zwischen Lichtleiterschicht 141 sowie zweiter und weiterer Adhäsionsschicht 16, 18 realisiert.

Die Sensorschicht 13 weist in einem Raster angeordnete lichtempfindliche Elemente 131 mit einer Auflösung von 100 ppi bis 1000 ppi auf und gibt je nach detektierter Lichtintensität elektronische Signale weiter, die in ein Grauwertbild umgewandelt werden. Die lichtempfindlichen Elemente 131 der Sensorschicht 13 sind Fotodioden mit einer definierten Sensitivität für einen bestimmten Spektralbereich des Lichts. In einer bevorzugten Ausführungsform ist die Sensitivität der lichtempfindlichen Elemente 131 auf das emittierte Beleuchtungslicht der Lichtleiterschicht 141 spektral angepasst, um das Signal-Rausch-Verhältnis (SNR) zu erhöhen.

Es sei darauf hingewiesen, dass alle vorstehenden Angaben zu den Materialien und Parametern der Adhäsionsschichten 15, 16 und 18, der Lichtleiterschicht 141 und der Sensorschicht 13 auch für alle anderen beschriebenen Anordnungen gelten.

Infolge der Teiltransparenz der Sensorschicht 13, bei der die Transparenz vorteilhaft dadurch erreicht wird, dass jedes Sensorelement 131 innerhalb des regelmäßigen Pixelrasters der Sensorschicht 13 einen transparenten Bereich 132 beinhaltet, können Anweisungen oder andere Nutzerinformationen mit ausreichend hoher Intensität an der Auflagefläche 11 der Deckschicht 12 vom Nutzer der Vorrichtung gesehen werden.

Durch den über die gesamte Sensorschicht 13 gleichmäßig vorliegenden definierten Füllfaktor von nichttransparenten Sensorelementen 131 und transparenten Bereichen 132 kann die Information des Displays 17 auch ohne Verzerrungen, Trübung oder Farbeinschränkungen angezeigt werden.

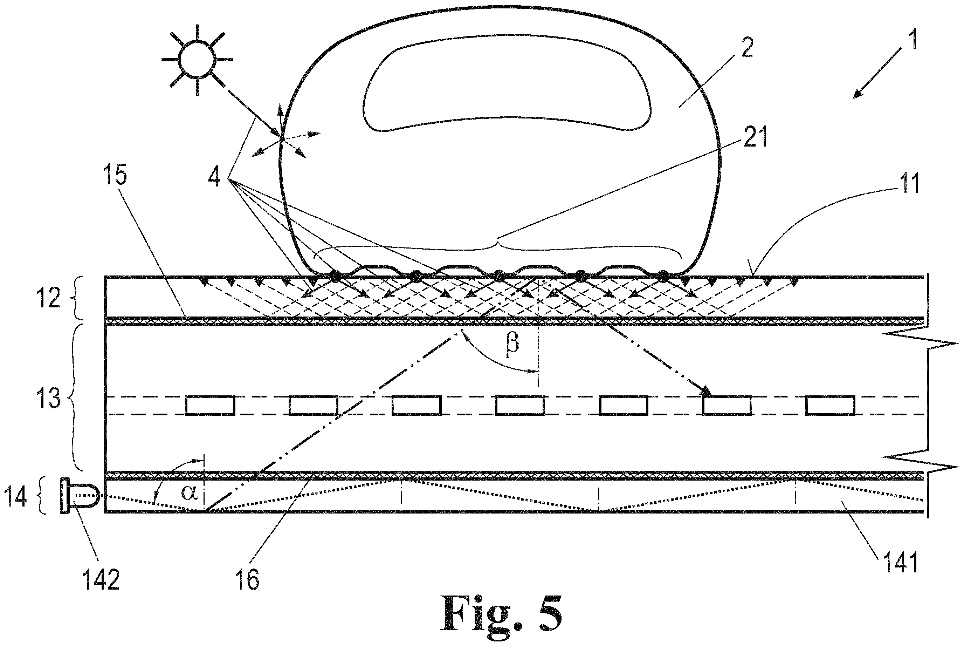

Um die Auflösung eines aufgenommenen Hautabdrucks 21 zu verbessern und außerdem den Einfluss von Störlicht 4 (nur in Fig. 5 gezeigt), das aus Umgebungslicht oder dem internen Licht des Displays 17 resultiert, zu verringern, ist in der bevorzugten Ausführungsform von Fig. 2 über den lichtempfindlichen Elementen 131 der Sensorschicht 13 eine Blendenschicht 133 zur Beschränkung des detektierbaren Winkelbereichs jedes lichtempfindlichen Elements 131 angeordnet. Auf diese Weise wird der Einfluss von horizontaler und vertikaler Divergenz des Beleuchtungslichts verringert und in der Folge lassen sich dickere Deckschichten 12 oder zusätzliche Substratschichten 172 bei gleichbleibender Auflösung verwenden, um beispielsweise Schutz und/oder Stabilität des Schichtkörpers 1 und der gesamten Vorrichtung zu verbessern.

Zum effektiven Blockieren von Störlicht oder Beleuchtungswinkeln, die nicht detektiert werden sollen, sind nichttransparente Blendenmaterialien notwendig. Bevorzugt sind für die einzelnen Blenden in der Blendenschicht 133 Materialien, die aufgrund ihrer guten Strukturierbarkeit in photolithographischen Beschichtungsprozessen Verwendung finden, beispielsweise Metalle wie Chrom, Aluminium, Gold, Molybdän, Kupfer, Silber, Silizium. Aufgrund der Reflexionseigenschaften dieser Materialien kann es jedoch an den Oberflächen der Blenden zu unerwünschten Reflexionen kommen, die sich einschränkend auf den Kontrast der Bildaufnahme auswirken, das Rauschen erhöhen oder Doppelbilder erzeugen. Deshalb werden bevorzugt absorbierende organische Materialien, wie z. B. Polytetrafluorethylen, und absorbierende anorganische Materialien, wie diamantähnliche Kohlenstoffschichten, schwarzes Chrom, Kupfer-Indium-Disulfid, oder Materialien mit spezieller Mikrostruktur eingesetzt. Besonders bevorzugt sind Materialien, die sich über Druckverfahren, z. B. per Siebdruck, als strukturierte Blendenschicht 133 über den lichtempfindlichen Elementen 131 der Sensorschicht 13 aufbringen lassen, da diese schnell, flexibel sowie kostengünstig herstellbar sind. In Druckverfahren werden hierfür vornehmlich organische Materialien verwendet.

Die lichtempfindlichen Elemente 131 der Sensorschicht 13 verfügen in einer weiteren Ausführungsform über eine elektronische Steuereinheit zur Steuerung der Belichtungszeit (nicht gezeichnet), z.B. als Rolling-Shutter oder als Global-Shutter, wie sie in der US 2017/0085813 A1 offenbart ist. Hierdurch wird ermöglicht, dass die Belichtungszeit und somit die Integrationszeit der lichtempfindlichen Elemente 131 an die verschiedenen Helligkeiten des Displays 17 und von Umgebungslicht angepasst werden kann, die im Anwendungsszenario der erfindungsgemäßen Vorrichtung vom Nutzer oder durch unterschiedliche Umgebungslichtbedingungen variiert. Durch diese elektronische Shuttersteuerung muss das Display 17 während der Aufnahme von Hautabdrücken 21 nicht zwingend ausgeschaltet werden und die Aufnahme von kontrastreicheren Hautabdrücken 21 wird trotzdem ermöglicht.

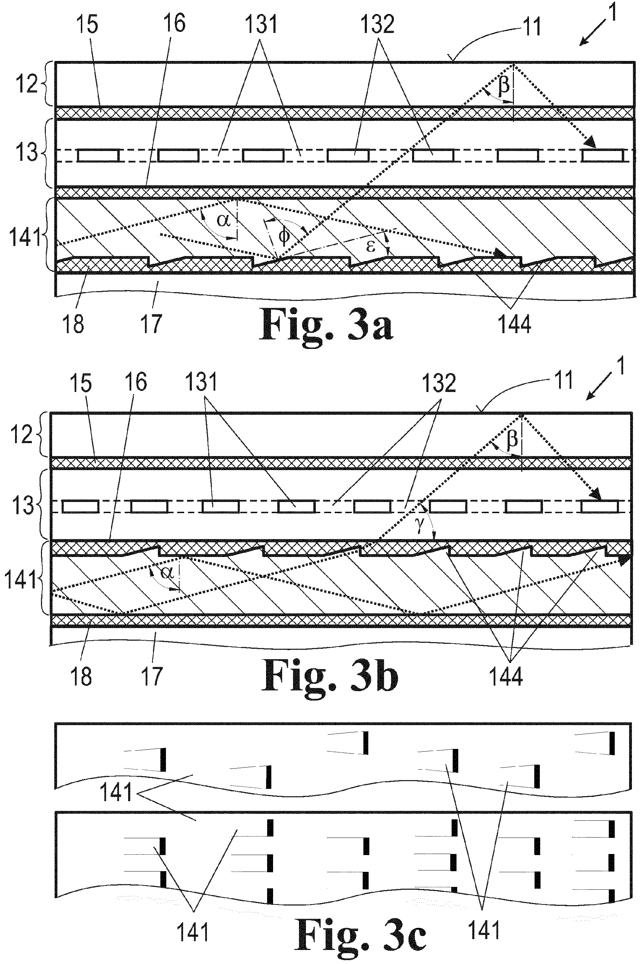

Fig. 3a zeigt eine Ausführungsform des Schichtkörpers 1 in der Seitenansicht mit einer vergrößerten Darstellung der Lichtleiterschicht 141, wobei beispielhaft mehrere Lichtauskoppelstrukturen 144 an der Unterseite der Lichtleiterschicht 141 mit einem einen Neigungswinkel $\varepsilon$ gezeichnet sind. Trifft das in der Lichtleiterschicht 141 unter dem Lichtleitwinkel $\alpha$ geführte Licht auf eine Lichtauskoppelstruktur 144 mit dem Neigungswinkel $\varepsilon$, ergibt sich ein Reflexionswinkel $\Phi$ zum Lot der Lichtauskoppelstruktur 144, wobei gilt: $\Phi = \alpha - \varepsilon$. Das an der Lichtauskoppelstruktur 144 reflektierte Strahlenbündel kann nun durch seine Winkeländerung nicht mehr an der zweiten Adhäsionsschicht 16 totalreflektiert werden, sondern durchläuft diese sowie die darüber liegende Sensorschicht 13, die ersten Adhäsionsschicht 15 und die Deckschicht 12. In Abhängigkeit des Brechungsindex der Deckschicht 12 weist das an die Auflagefläche 11 treffende Beleuchtungslicht einen Beleuchtungswinkel $\beta$ auf, der an der Auflagefläche 11 (Grenzfläche zu Luft) das Beleuchtungslicht totalreflektiert und eine Aufnahme von Hautabdrücken 21 (nicht gezeichnet) nach dem Prinzip der gestörten internen Totalreflexion (FTIR oder kurz: TIR) ermöglicht.

Fig. 3b zeigt eine weitere Ausführungsform des Schichtkörpers 1 in der Seitenansicht mit einer vergrößerten Darstellung der Lichtleiterschicht 141, wobei in diesem Beispiel mehrere Lichtauskoppelstrukturen 144 an der Oberseite der Lichtleiterschicht 141 vorhanden sind. Die Lichtauskoppelstrukturen 144 sind dabei so ausgebildet, dass in der Lichtleiterschicht 141 geführtes Licht beim Auftreffen auf die Lichtauskoppelstrukturen 144 ein erstes Mal an der Grenzfläche zur darüber liegenden zweiten Adhäsionsschicht 16 und ein zweites Mal an der Grenzfläche zur Sensorschicht 13 unter einem definierten Brechungswinkel $\gamma$ aus der Lichtleiterschicht 141 in Richtung Deckschicht 12 auskoppelt. Hierbei wird der Hauptstrahl des in der Lichtleiterschicht 141 geführten Lichts mit dem Winkel $\alpha$ inklusive einer Divergenz beim Auftreffen auf die Lichtauskoppelstruktur 144 ausgekoppelt, wobei keine weitere Einschränkung der Divergenz durch den Neigungswinkel $\varepsilon$ (nicht gezeichnet) der Lichtauskoppelstrukturen 144 erfolgt. Dies macht zwar die Lichtauskopplung hinsichtlich der Lichtintensität effizienter, jedoch ist die vertikale Divergenz des ausgekoppelten Strahlenbündels größer als bei Fig. 3a, was eine verringerte Auflösung zur Folge haben kann. Ebenfalls ist die maximal mögliche Änderung des Winkels zwischen α und β niedriger als bei Fig. 3a.

Zur Art und Form der Lichtauskoppelstrukturen 144 im Material der Lichtleiterschicht 141 sind zwei Beispiele der Formgebung und Verteilung für einen Ausschnitt der Lichtleiterschicht 141 in Fig. 3c als Draufsichten zur Darstellung der Lichtauskoppelstruktur nach Fig. 3a und Fig. 3b gezeichnet. Außer den gezeigten Formen von Rechtecken und Trapezen sind aber auch Dreiecke, Kreissektoren bzw. Kreisabschnitte oder Abschnitte von Ellipsen geeignet.

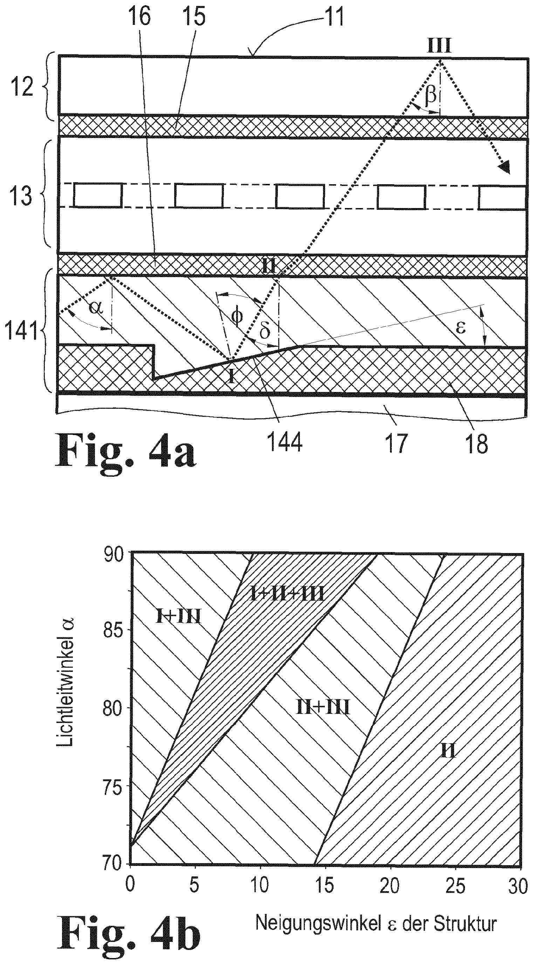

Fig. 4a und Fig. 4b zeigen die Zusammenhänge für die Ausführungsform in Fig. 3a zwischen dem Lichtleitwinkel α, dem Beleuchtungswinkel β, dem Reflexionswinkel Φ, dem Austrittswinkel δ und dem Neigungswinkel ε. In Abhängigkeit von den Unterschieden der Brechungsindizes zwischen Lichtleiterschicht 141 und den angrenzenden Adhäsionsschichten 16 und 18 definieren sich Vorzugswinkel (Austrittswinkel δ), unter denen Beleuchtungslicht aus der Lichtleiterschicht 141 ausgekoppelt wird. Hierzu ist in Fig. 4a in der Seitenansicht ein schematischer Strahlengang für Lichtauskoppelstrukturen 144 an der Unterseite der Lichtleiterschicht 141 skizziert, wobei die Lichtleiterschicht 141 beispielhaft einen Brechungsindex von n = 1,49 und die angrenzenden Adhäsionsschichten 16 und 18 einen Brechungsindex von n = 1,41 aufweisen.

Zusätzlich beinhaltet Fig. 4b die drei Bedingungen (gekennzeichnet durch römische Zahlen I, II, III), die erfüllt sein müssen, um ein zweckmäßiges Arbeiten der Vorrichtung zu gewährleisten:

I: Geführte Strahlen (α>71°) müssen an Lichtauskoppelstruktur 144 totalreflektiert werden

$$\phi > \sin^{-1}\frac{1.41}{1.49} = 71° \mid \phi = \alpha - \varepsilon$$

II: Der durch die Lichtauskoppelstruktur 144 abgelenkte Strahl, der mit dem Austrittswinkel δ = α - 2·ε an der Oberseite der Lichtleiterschicht 141 auftrifft, darf dort nicht totalreflektiert werden

$$\delta < \sin^{-1}\frac{1.41}{1.49} < 71°$$

III: Am Deckschicht-Luft-Übergang muss Totalreflexion stattfinden (Deckschicht 12 mit n = 1,49 angenommen)

$$\delta > \sin^{-1}\frac{1.00}{1.49} = 42°$$

Die Grafik in Fig. 4b zeigt für das oben genannte Zahlenbeispiel die erlaubten Kombinationen aus dem Lichtleitwinkel α des in der Lichtleiterschicht 141 geführten Lichts und Neigungswinkel ε der Lichtauskoppelstrukturen 144, die zur erfindungsgemäßen Bildgebung bei der Aufnahme eines Hautabdrucks 21 beitragen (I+II+III). Für einen Neigungswinkel ε der Lichtauskoppelstrukturen 144 von ε ~ 10 werden die meisten Strahlen ausgekoppelt, die ursprünglich einen Lichtleitwinkel von α = 85°+/-5° hatten. Für die Sensorschicht 13 und Deckschicht 12 mit ähnlichem Brechungsindex wie die Lichtleiterschicht 141 (n ~ 1,5) ergibt sich somit ein Winkelspektrum β ~ δ = 65°+/-5°. Die gleichmäßige Lichtauskopplung auf der gesamten Fläche der Lichtleiterschicht 141 und eine somit homogene Ausleuchtung eines auf der Auflagefläche 11 aufliegenden Hautabdrucks 21, wird durch das Anpassen eines Füllfaktors der Lichtauskoppelstrukturen 144 umgesetzt.

In der Ausführungsform mit Lichtauskoppelstrukturen, wie in Fig. 3a gezeichnet, kann die vertikale Divergenz des ausgekoppelten Beleuchtungslichts im Vergleich zur Ausführungsform in Fig. 3b sehr genau über den Neigungswinkel ε der Lichtauskoppelstrukturen 144 und den Unterschied der Brechungsindizes zwischen der Lichtleiterschicht 141 und den benachbarten Adhäsionsschichten 16, 18 eingestellt werden. Je nach Anwendungsfall kann die erfindungsgemäße Vorrichtung mehr in Richtung Lichtintensität oder eines engen Winkelspektrums des Beleuchtungslichts optimiert werden. Qualitativ hochwertige Hautabdrücke 21 mit hoher Auflösung erhält man, indem das aus der Lichtleiterschicht 141 ausgekoppelte Licht eine sehr geringe Divergenz hat, also das ausgekoppelte Winkelspektrum klein ist.

Zur Verminderung des Einflusses von Störlicht 4, verursacht vornehmlich durch Umgebungslicht, wird in einer bevorzugten Ausführungsform, die in Fig. 5 dargestellt ist, zwischen Deckschicht 12 und Sensorschicht 13 eine erste Adhäsionsschicht 15 eingesetzt, die einen Brechungsindex aufweist, der so groß ist, wie der Brechungsindex der zweiten Adhäsionsschicht 16 zwischen Sensorschicht 13 und Lichtleiterschicht 141. Umgebungslicht während der Aufnahme von Hautabdrücken 21 sorgt dafür, dass die Haut des Fingers 2 leuchtet und über die Hautberge Licht in die Deckschicht 12 einkoppelt. Dies geschieht aufgrund von Mehrfachstreuung in der Haut und somit koppeln Teile des Umgebungslichts über den auf der Auflagefläche 11 positionierten Hautbereich in die Deckschicht 11 ein. Dieses Störlicht 4 verschlechtert die Aufnahme von Hautabdrücken 21, da das Störlicht 4 für eine Verminderung des Kontrasts im finalen Bild sorgt. Ein Anteil des Störlichts 4 gelangt deshalb nicht zur Sensorschicht 13, da Anteile des Störlichts 4 innerhalb der Deckschicht 12 die Bedingungen der Totalreflexion an der Grenzfläche zwischen Deckschicht 12 und erster Adhäsionsschicht 15 erfüllen.

Kommt als Deckschicht 12 beispielsweise Glas (n ~ 1,5) und eine erste Adhäsionsschicht 15 mit einem Brechungsindex von 1,4 zum Einsatz, dann wird Störlicht 4 mit Winkeln größer als 70° orthogonal zur Auflagefläche 11 an der Grenzfläche von Deckschicht 12 und erster Adhäsionsschicht 15 totalreflektiert und gelangt nicht zur Sensorschicht 13. Somit werden Anteile des Störlichts 4 von den lichtempfindlichen Sensorelementen 131 nicht detektiert und der Kontrast der Hautabdrücke 21 wird verbessert. In einer besonders bevorzugten Ausführungsform kommt für die Deckschicht 12 ein Material mit einem größeren Brechungsindex zum Einsatz. Flintglas oder Saphir weisen zum Beispiel einen Brechungsindex von n > 1,7 auf, wodurch noch mehr Störlichtanteile innerhalb der Deckschicht 12 totalreflektiert werden und nicht zur Sensorschicht 13 gelangen. Bei einem Brechungsindex von n = 1,7 werden schon alle Störlichtanteile mit einem Winkel größer als 56° totalreflektiert. Je größer Unterschied der Brechungsindizes zwischen Deckschicht 12 und erster Adhäsionsschicht 15 ist, umso mehr Störlicht 4 wird innerhalb der Deckschicht 12 totalreflektiert und nicht von den lichtempfindlichen Elementen 131 der Sensorschicht 13 detektiert.

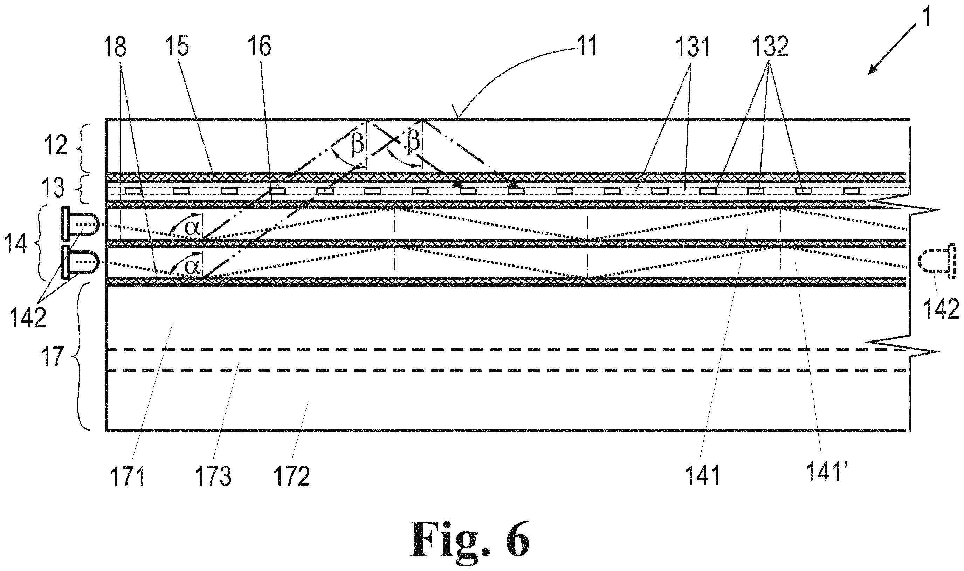

Fig. 6 zeigt eine weitere zweckmäßige Ausführung der erfindungsgemäßen Vorrichtung, die im Unterschied zu Fig. 2 zwei zueinander benachbarte Lichtleiterschichten 141, 141' aufweist. Die weitere Lichtleiterschicht 141' bringt dabei mehrere Vorteile.

Aufgrund der hohen Transparenz von Lichtleitern können mehrere Lichtleiterschichten 141, 141' beliebig übereinander angeordnet und durch einen weiteren niedriger brechenden Klebstoff miteinander verbunden werden. Eine solche weitere Adhäsionsschicht 18 sollte dabei den gleichen Brechungsindex aufweisen, wie die zweite Adhäsionsschicht 16 zwischen der Lichtleiterschicht 141 und der Sensorschicht 13. Zunächst gibt es verschiedene Möglichkeiten, wie die Lichtleiterschichten 141 und 141' mit Licht gespeist werden. Da gibt es zunächst die in Fig. 6 gezeichnete Variante, bei der die Lichtleiterschichten 141, 141' von derselben Schmalseite des Schichtkörpers 1 mit LEDs 142 versehen sind. Hierfür ergibt sich als erstes der Vorteil einer Intensitätssteigerung des ausgekoppelten Lichts, da beide Lichtleiterschichten 141 hochtransparent sind und die weitere Lichtleiterschicht 141' die erste Lichtleiterschicht 141 faktisch nicht wahrnimmt. Daraus ergibt sich als Vorteil ein Schutz gegen Umgebungslicht, da eine Steigerung der TIR-Beleuchtungsintensität (die sich somit "hochregeln" lässt) und parallel eine Reduzierung der Belichtungszeit (Herunterregeln der Belichtungszeiten eines in der Sensorschicht 13 implementierten elektronischen Shutters bei viel Umgebungslicht) das Beleuchtungsverhältnis in Richtung der TIR-Beleuchtungsintensität verschiebt, womit der Einfluss von Umgebungslicht relativ verringert und somit eine kontrastreichere Aufnahme von Hautabdrücken ermöglicht wird.

Zudem sind die parallel zueinander ausgekoppelten Lichtstrahlen aus der Draufsicht betrachtet zueinander versetzt und tragen zur Homogenisierung der Beleuchtung bei, indem jede Lichtleiterschicht 141 jeweils nur einen bestimmten Teil der Auflagefläche 11 beleuchtet, womit auch sehr gut größere Auflageflächen 11 beispielsweise für die Aufnahme ganzer Handflächen, oder mehrerer Hände beleuchtet werden können.

Der zweite Vorteil besteht darin, dass mehrere Aufnahmen bei ausschließlicher Beleuchtung mit jeweils einer der gleichartigen Lichtleiterschichten 141, 141' etc. nacheinander gemacht, die Bilder verglichen und das bessere ausgesucht werden können. Dies ist neben Maßnahmen zur Lebenderkennung für die Aufnahme von trockenen und feuchten Hautabdrücken 21 interessant. Zur Lebenderkennung kann in der weiteren Lichtleiterschicht 141' Beleuchtungslicht mit anderen Wellenlängen (z.B. UV, IR) zusätzlich zu VIS-Spektralbereichen eingesetzt werden.

Ein dritter Vorteil ergibt sich, wenn die beiden Lichtleiterschichten 141 unterschiedliche Neigungswinkel ε ihrer Lichtauskoppelstrukturen 144 aufweisen und die weitere Lichtleiterschicht 141' beispielsweise einen Beleuchtungswinkel β' verursacht, der nicht TIR-geeignet ist, sondern direkt durch die Auflagefläche 11 der Deckschicht 12 nach außen tritt und dort ein aufgelegtes Dokument 3 beleuchten kann. Für diesen Dokumentlesemodus kann die erste Lichtleiterschicht 141 zusätzlich ausgeschaltet werden, so dass gar kein TIR-Licht erzeugt wird. Hierdurch wird eine kontraststärkere Aufnahme von Dokumenten 3 ermöglicht, da das intern totalreflektierte Beleuchtungslicht der Lichtleiterschicht 141 nicht bei der Aufnahme stört, wenn es abschaltbar ist.

In einer modifizierten Variante von Fig. 6 kann das Licht der LEDs 142 für jede der Lichtleiterschichten 141 und 141' an verschiedenen, vorzugsweise gegenüberliegenden Schmalseiten des Schichtkörpers 1 eingeleitet werden. Diese Variante wird durch die gestrichelt gezeichnete LED 146 auf der rechten Schmalseite der Lichtleiterschicht 141' symbolisch dargestellt und verdeutlicht diese wählbare Alternative.

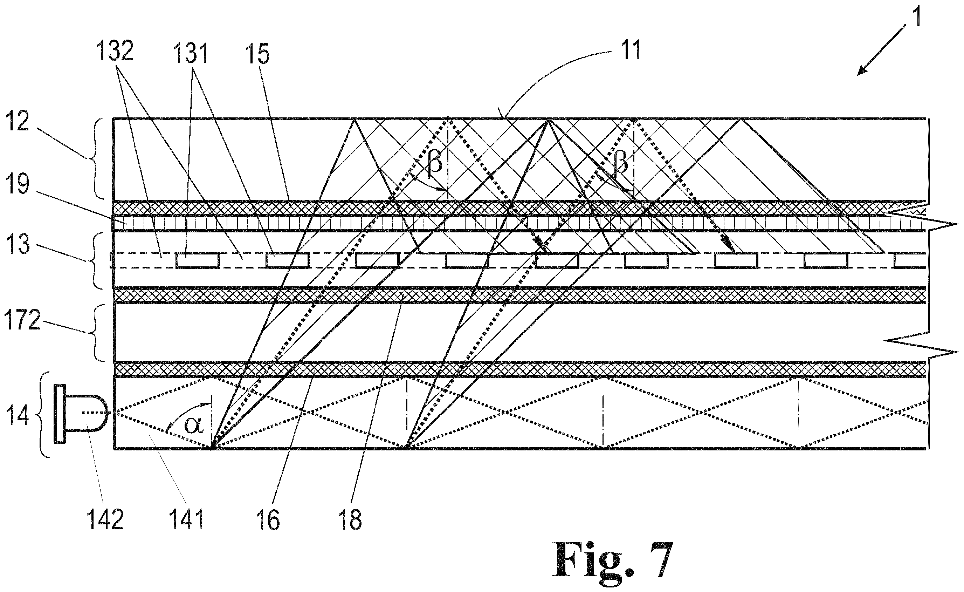

In diesem alternativen Fall führen die aus den Lichtleiterschichten 141 und 141' ausgekoppelten Strahlen zu zwei unterschiedlichen Bildern mit einem Versatz , der herausgerechnet werden kann, und somit werden die beiden Fingerabdruckbilder zwecks Qualitätsverbesserung miteinander verglichen und das bessere Bild ausgewählt oder beide Bilder werden über anschließende Bildverarbeitung miteinander fusioniert. Fig. 7 zeigt eine weitere abgewandelte Ausführung von Fig. 2, die sich dadurch auszeichnet, dass zwischen der Sensorschicht 13 und der Lichtleiterschicht 141 ein zusätzliches Substrat 172 eingefügt ist, das sowohl aus Stabilitätsgründen als auch zur Beleuchtungshomogenisierung vorteilhaft ist.

Des Weiteren ist in Fig. 7 über der Sensorschicht 13 eine - hier beispielhaft als vollflächige Spektralfilterschicht 19 gezeichnete - Filterschicht eingefügt, die vor allem eine zusätzliche Eliminierung des Umgebungslichts vornehmen kann.

Die Spektralfilterschicht 19 kann vorzugsweise strukturiert lediglich über den lichtempfindlichen Elementen 131 der Sensorschicht 13 aufgetragen sein, wodurch das Licht eines unterhalb der Vorrichtung angelegten lichtemittierenden Displays 17 von der Spektralfilterschicht 19 unbeeinflusst bleibt. Die Spektralfilterschicht 19 ist in einer bevorzugten Ausführungsform ein Schmalbandfilter und auf die Wellenlänge des Beleuchtungslichts der Lichtleiterschicht 141 angepasst, sodass sie für die meisten Teile des Beleuchtungslichts transparent ist und für restliche Lichtanteile absorbierend wirkt.

Wie aus Fig. 7 weiterhin zu entnehmen ist, wird durch die größere Schichtdicke zwischen Lichtleiterschicht 141 und Auflagefläche 11 der Deckschicht 12 eine stärkere Bündelverbreiterung der Beleuchtungsstrahlen zu beobachten sein. Dieser Umstand ist durch zwei an der Unterseite der Lichtleiterschicht 141 ausgekoppelte Strahlenbündel dargestellt, die sich aufgrund des zusätzlichen Substrats 172 bereits an der Auflagefläche 11 der Deckschicht 12 überlappen.

Die Signalverbreiterung beziehungsweise Aufweitung der Strahlenbündel steht bei dieser Erfindung im engen Zusammenhang mit einem Füllfaktor der Lichtauskoppelstrukturen 144 der Lichtleiterschicht 141. Liegt der Füllfaktor beispielsweise bei 1 % und jede Lichtauskoppelstruktur 144 ist ca. 10 $\mu$m lang (bzw. hat einen Durchmesser von 10 $\mu$m), so beträgt die durchschnittliche Länge zur nächstliegenden Lichtauskoppelstruktur 144 rund 1 mm. Die Signalverbreiterung ist abhängig von der Divergenz (FWHM z. B. 10° bzw. $\pm 5°$ um den Beleuchtungswinkel $\beta$) sowie vom Abstand zwischen den Lichtauskoppelelementen 144 und der Auflagefläche 11 (z.B. 5,5 mm) und ergibt in diesem Beispiel eine Signalverbreiterung eines ausgekoppelten Lichtpunktes auf ca. 8,5 mm. Das bedeutet, dass der maximale Abstand zwischen den Lichtauskoppelstrukturen 144 in diesem Beispiel ca. 4 mm nicht übersteigen sollte. Wie oben gezeigt, liegt der Abstand jedoch nur bei ca. 1 mm, womit jede Stelle der Auflagefläche 11 von mehreren Lichtauskoppelelementen 144 beleuchtet wird und die Sensorschicht 13 die einzelnen diskret emittierenden Lichtpunkte der Lichtauskoppelstrukturen 144 der Lichtleiterschicht 141 nicht "sieht".

Zur gleichmäßigen Beleuchtung der Auflagefläche 11 ohne Intensitätsspitzen durch einzelne Lichtauskoppelstrukturen 144 stehen zwei Varianten zur Verfügung.

Zum einen ist es möglich, dass die Lichtauskoppelstrukturen 144 einen Abstand s aufweisen (nicht gezeichnet), der sehr viel kleiner ist als ihre Signalverbreiterung bis zur Auflagefläche 11, denn dann überlagern sich die Strahlenbündel der einzelnen Lichtauskoppelstrukturen 144, bevor sie auf die Auflagefläche 11 der Deckschicht 12 treffen bzw. anschließend in Richtung Sensorschicht 13 reflektieren. Zum anderen ist es in einer zweiten Variante möglich, dass die Lichtauskoppelstrukturen 144 einen Abstand s aufweisen, der sehr viel kleiner als der Mittenabstand der lichtempfindlichen Elemente ist, da in diesem Fall die Signalverbreiterung der Strahlenbündel nicht zwingend erforderlich ist.

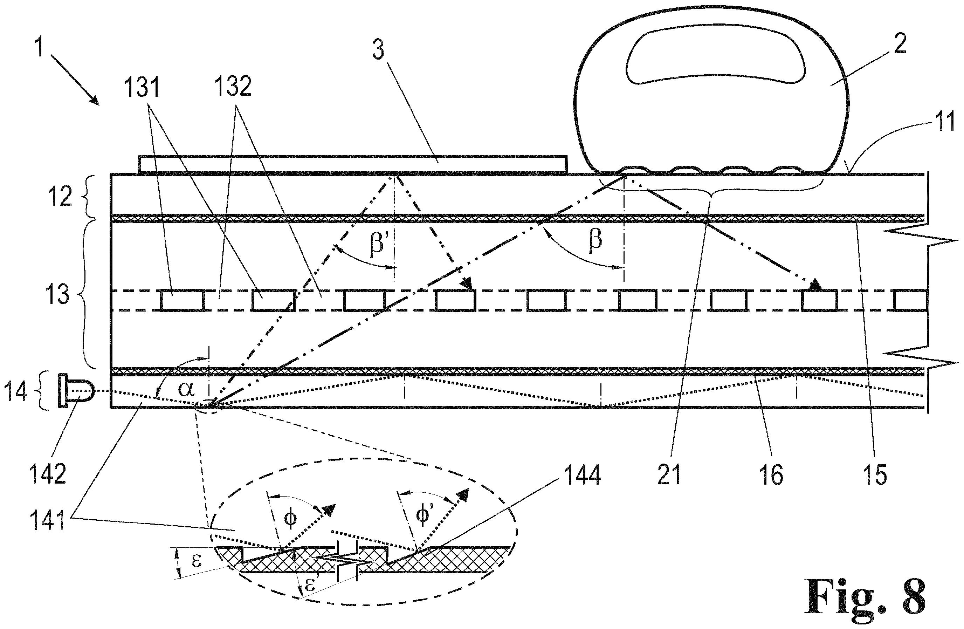

Eine weitere bevorzugte Ausführungsform ohne Display 17 ist in Fig. 8 dargestellt. Hierbei ist die Lichtleiterschicht 141 unter der Sensorschicht 13 so ausgebildet, dass anteilig der Beleuchtungswinkel $\beta$ zur Beleuchtung eines Hautabdrucks 2 und Beleuchtungslicht mit dem Beleuchtungswinkel $\beta'$ zur Beleuchtung von Dokumenten 3 aus der Lichtleiterschicht 141 in Richtung Auflagefläche 11 ausgekoppelt werden. Die Anteile des Lichts zur Beleuchtung von Dokumenten 3 (Beleuchtungswinkel $\beta'$) koppeln dabei aus der Deckschicht 12 in Richtung Luft aus, beleuchten das Dokument 3 und das vom aufliegenden Dokument 3 zurückgestreute Licht wird von der Sensorschicht 13 detektiert. Da zwischen dem aufliegenden Dokument 3 und der Auflagefläche 11 keine optische Kopplung besteht, sondern stets eine dünne Luftschicht existiert, kann das Dokument 3 nicht mit in der Deckschicht 12 intern totalreflektiertem Licht mit dem Beleuchtungswinkel $\beta$ beleuchtet werden.

Beinhaltet die erfindungsgemäße Vorrichtung ein Display 17, wird das vom Display 17 emittierte Licht als Beleuchtungslicht zur Aufnahme von Dokumenten 3 genutzt, da dies aus der Deckschicht 12 in Richtung Luft auskoppelt und eine Anpassung der Lichtauskoppelstrukturen 144 der Lichtleiterschicht 141 nicht erforderlich ist. Wird die Vorrichtung, wie in Fig. 8 gezeigt, betrieben, kann der Beleuchtungswinkel $\beta'$ zur Beleuchtung aufliegender Dokumente 3 zusätzlich vom Nutzer der Vorrichtung visuell wahrgenommen werden, wenn Licht im visuellen Bereich des Lichtspektrums eingesetzt wird. Das Leuchten der Auflagefläche 11 kann als vereinfachte Benutzerführung kenntlich machen, wenn die Vorrichtung bereit zur Aufnahme von Hautabdrücken 21 oder Dokumenten 3 ist, ohne dass ein Display 17 erforderlich ist. Der Anteil des Beleuchtungslichts, der über die Deckschicht 12 zur Luft ausgekoppelt wird, sollte im Vergleich zum totalreflektierenden Beleuchtungslicht bevorzugt relativ klein sein und weniger als 50 % betragen, da dieser Lichtanteil bei der Aufnahme von Hautabdrücken 21 als Störlicht kontrastmindernd wirkt. In einer bevorzugten Ausführungsform sind die Lichtauskoppelstrukturen 144 so ausgebildet, dass zwischen 50 % und 95 % des aus der Lichtleiterschicht 141 ausgekoppelten Beleuchtungslichts beim Übergang zu Luft an der Auflagefläche 11 in der Deckschicht 12 totalreflektierter Lichtanteil sind, der zur Aufnahme von Hautabdrücken nutzbar ist (Beleuchtungswinkel $\beta$), während ein verbleibender restlicher Lichtanteil für Beleuchtungswinkel zur Beleuchtung von Dokumenten 3 nutzbar ist (Beleuchtungswinkel $\beta'$).

Ist die vertikale Divergenz um den Lichtleitwinkel $\alpha$ des in der Lichtleiterschicht 141 geführten Lichts groß genug, werden automatisch Beleuchtungswinkel $\beta$, $\beta'$ zur Beleuchtung von Hautabdrücken 21 (Beleuchtungswinkel $\beta$) und Dokumenten 3 (Beleuchtungswinkel $\beta'$) in Richtung Deckschicht 12 ausgekoppelt. Besteht die Deckschicht 12 aus einem Material mit einem Brechungsindex von ~ 1,5 (zum Beispiel Glas) und liegt der Beleuchtungswinkel $\beta$ bei 50° und hat eine Divergenz von +/-10°, werden Beleuchtungswinkel $\beta'$ zwischen 40° und 42° in Luft ausgekoppelt und zur Beleuchtung eines aufliegenden Dokuments 3 genutzt.

Diese Vorgehensweise kann auch in der Darstellung von Fig. 8 durch unterschiedlich eingebrachte Neigungswinkel ε der Lichtauskoppelstrukturen 144 realisiert werden. Unterschiedliche Neigungswinkel ε und ε' sorgen für unterschiedliche Reflexionswinkel Φ und Φ' an den entsprechenden Lichtauskoppelstrukturen 144 und führen zu unterschiedlichen Beleuchtungswinkeln β und β' an der Auflagefläche 11. Hierdurch können die Anteile des Beleuchtungslichts für Hautabdrücke 21 und Dokumente 3 direkt gesteuert werden. In Fig. 8 sind beispielhaft in der vergrößerten Detailansicht der Lichtauskoppelstrukturen 144 zwei unterschiedliche Neigungswinkel ε und ε' gezeigt, sodass die Reflexionswinkel Φ und Φ' der Lichtauskoppelstrukturen 144 und somit die Beleuchtungswinkel β und β' variieren, d.h. beide Beleuchtungszustände für Hautabdrücke 21 und für Dokumente 3 aus derselben Lichtleiterschicht 141 erzeugt werden können. Die unterschiedlichen Lichtauskoppelstrukturen 144 können in voneinander unabhängigen Rastern (nicht gezeichnet) liegen. In einer bevorzugten Ausführungsform ist dafür jede zehnte Lichtauskoppelstruktur 144 mit einem Neigungswinkel ε' ausgebildet, der einen Beleuchtungswinkel β' zur Beleuchtung von Dokumenten 3 realisiert, sodass immer noch 90 % der ausgekoppelten Strahlenbündel mit dem Beleuchtungswinkel β an der Auflagefläche 11 beim Übergang zu Luft totalreflektierten und zur Beleuchtung für die Aufnahme von Hautabdrücken 21 genutzt werden.

In einer weiteren Ausführungsform ist ein erster Bereich der Auflagefläche 11 nur für die Aufnahme von Dokumenten 3 vorgesehen und wird mit Beleuchtungswinkeln β' aus der Lichtleiterschicht 141 beleuchtet und ein zweiter Bereich der Auflagefläche 11 ist ausschließlich für die Aufnahme eines Hautabdrucks 2 vorgesehen und wird mit Beleuchtungswinkeln β aus der Lichtleiterschicht 141 beleuchtet, wobei das Beleuchtungslicht an der Grenzfläche zwischen Deckschicht 12 und Luft totalreflektiert.

Es können also verschiedene Objekte, z. B. Haut, Dokumente etc, durch Wahl der Gestaltung der Lichtauskoppelelemente 144 der Lichtleiterschicht 141 aufgenommen werden. Dadurch ist es auch möglich, die Strukturen an die unterschiedlichen Reflexions- und Streuverhalten von einzelnen Objekten anzupassen.

In Fig. 9 sind unterschiedliche Arten für die Einkopplung von Beleuchtungslicht an einer Schmalseite der Lichtleiterschicht 141 mittels mehrerer LED 142 und deren mehr oder weniger divergent abgestrahlte Strahlenbündel in fünf Draufsichten dargestellt, die sich durch ihren Zustand der Vorkollimation unterscheiden. Vorangestellt sei für diese Ausführungsvarianten, dass die meisten LED 142 in unterschiedlichem Grad bereits intern vorkollimiert sind.

In der Teilabbildung (a) von Fig. 9 sind diesbezüglich die Einkopplung von Beleuchtungslicht an einer Schmalseite der Lichtleiterschicht 141 mittels mehrerer LED 142 und deren deutlich divergente Strahlenbündel in der Draufsicht dargestellt.

Als Quelle für das Beleuchtungslicht können verschiedene Ausführungsformen zum Einsatz kommen. Werden mehrere LED ohne Kollimation der Strahlenbündel 147 eingesetzt, überlagern sich die einzelnen Strahlenbündel 147 und führen dazu, dass ein beleuchteter Objektpunkt eines auf der Auflagefläche 11 aufliegenden Fingers 2 durch unterschiedliche Strahlenbündel 147 beleuchtet wird und auf mehrere Bildpunkte der abgetasteten Bildaufnahme (verteilt), bzw. auf mehreren Punkten der Sensorschicht 13 (hier nicht gezeichnet), abgebildet wird. Die mögliche Abbildung eines Objektpunkts auf mehrere Bildpunkte ist in Teilabbildung (a) von Fig. 9 durch die Pfeilspitzen dargestellt.

Durch das Durchmischen der Strahlenbündel 147 der mehreren lichtabstrahlenden LEDs 142, kommt es zwangsläufig dazu, dass von einem Objektpunkt an der Auflagefläche 11 mehrere Bildpunkte in der Sensorschicht 13 erzeugt werden, womit die gleiche Objektinformation zum Beispiel eines aufliegenden Fingers 2 auf mehreren lichtempfindlichen Elementen 131 detektiert wird und die Auflösung des abgebildeten Hautabdrucks 21 abnimmt. Je kleiner die horizontale und vertikale Divergenz der Strahlenbündel 147 ist, desto höher ist die Auflösung.

In Fig. 9 zeigt die Teilabbildung (a) schematisch in einer Draufsicht, wie jeweils ein Objektpunkt (jeweils als schwarzer Punkt entlang der unteren gestrichelten Linie gezeichnet) auf zwei voneinander entfernte Bildpunkte (als Punkte entlang der zweiten gestrichelten Linie) abgebildet wird. Dies geschieht, da durch die Deckschicht 12 ein Abstand zwischen Auflagefläche 11 und Sensorschicht 13 existiert. Je geringer dieser Abstand ist, desto weniger läuft die Objektinformation breit und desto besser ist die Auflösung. Dicken von 50 μm bis 1000 μm der Deckschicht 12 sind durchaus üblich. Eine große Dicke der Deckschicht 12 gewährleistet einen verbesserten mechanischen Schutz für die Vorrichtung und ist deshalb zu bevorzugen. Je geringer die Divergenz des Strahlenbündels 147 ist, desto besser ist die Auflösung bzw. umso größer kann die Dicke der Deckschicht 12 bei gleicher Auflösung gewählt werden. Einen Ansatz zur Verbesserung der Auflösung bzw. Vergrößerung der Dicke der Deckschicht 12 sind daher Mittel zur Kollimation der Strahlenbündel 147 der LEDs 142, wie sie in weiteren Teilabbildungen von Fig. 9 gezeigt sind.

In Teilabbildung (b) sind vom Hersteller vorkollimierte LEDs 142 eingesetzt und diese - wie oben beschrieben - dicht gepackt zueinander und mit geringstem Abstand zur einzukoppelnden Schmalseite der Lichtleiterschicht 141 angeordnet. Dadurch kann ohne zusätzliche Vorkollimationsoptik 143 eine vertretbare Divergenz der Strahlenbündel 147 bei einer guten Durchmischung der Lichtanteile der einzelnen LEDs 142 realisiert werden. Ebenfalls kommt es an der Grenzfläche zwischen Luft und Lichtleiterschicht 141 bei der Einkopplung des Beleuchtungslichts zur Lichtbrechung, wodurch eine gewisse Vorkollimation erreicht wird.

Falls diese Art der Einkopplung den Anforderungen an die örtliche Auflösung der Bildaufnahme nicht gerecht wird, sind die Ausführungsvarianten mit einer zusätzliche Vorkollimationsoptik 143 gemäß den Teilabbildungen (c) und (d) von Fig. 9 zu bevorzugen, wobei in Teilabbildung (c) an der Schmalseite der Lichtleiterschicht 141 angeformte refraktive konvexe Linsen als Vorkollimationsoptik 143 gewählt sind, die auch durch GRIN-Linsen ersetzt werden können. In Teilabbildung (d) sind die refraktiven Vorkollimationsoptiken 143 als konkave Linsen im Material der Lichtleiterschicht 141 eingearbeitet und aus einem optisch dünneren Medium, d.h. mit deutlich kleinerem Brechungsindex gegenüber der Lichtleiterschicht 141 gebildet. Dafür eignet sich am besten ein gasförmiges Medium. wie z.B. Luft. Der mit Ausführungsbeispielen gemäß den Teilabbildungen (c) und (d) erreichbare Kollimationszustand sichert zwar die bestmögliche Auflösung, hat aber den Nachteil einer ungleichmäßigen Intensitätsverteilung der Beleuchtung der Auflagefläche 11, sodass zwischen diesen beiden Ausführungen und der Variante nach Teilabbildung (b) abzuwägen ist, welche Anforderungen den Vorrang erhalten sollen.

In der Teilabbildung (e) von Fig. 9 sind die dicht gepackten LEDs 142 mit verschiedener spektralen Abstrahlungswellenlängen ausgestattet, die abwechselnd entlang der Schmalseite der Lichtleiterschicht 141 angeordnet und schaltbar sind, wobei mindestens zwei unterschiedliche Spektralbereiche ausgewählt werden, um damit alternativ beleuchtete Bilder der aufgelegten Objekte, Hautabdrücke 2 oder Dokumente 3, aufzunehmen, die vorzugsweise zum Echtheitsnachweis verwendet werden.

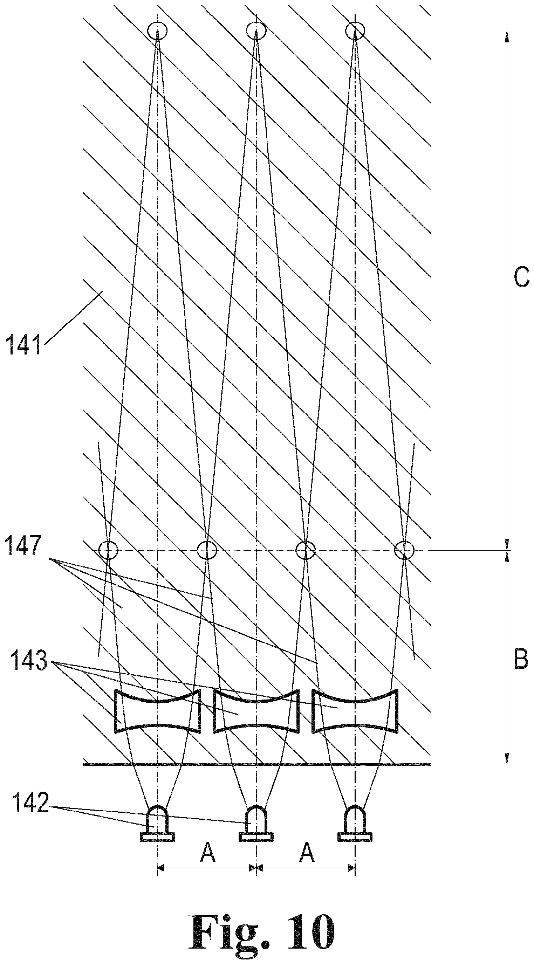

Fig. 10 zeigt eine Ausführungsform mit einer Lichteinkopplung an einer Schmalseite der Lichtleiterschicht 141 und Vorkollimationsoptiken 143 in der Draufsicht.

Bevor das Beleuchtungslicht der mehreren LEDs 142 ein auf der Auflagefläche 11 aufliegendes Objekt (Finger 2 oder Dokument 3) beleuchtet, ist es vorteilhaft, dass die Strahlenbündel 147 der mehreren LEDs 142 ausreichend durchmischt sind, um die Auflagefläche 11 gleichmäßig zu beleuchten. Dies wird in einer bevorzugten Ausführungsform durch der Auflagefläche 1 vorgelagerte Einkoppelbereiche für die Strahlenbündel 147 realisiert. Hierfür sind gemäß Fig. 10 zur Lichteinkopplung mehrere mit einem minimalen Mittenabstand A eng aneinander gereihte LED 142 mit divergenten Strahlenbündeln 147 an einer Schmalseite der Lichtleiterschicht 141 angeordnet. Die unterschiedlichen Strahlenbündel 147 werden mit Hilfe je einer Vorkollimationsoptik 143 mit dem Ziel der Verringerung ihrer Divergenz vorkollimiert.

Wie eingangs beschrieben, ist eine Vorkollimation der LED 142 hilfreich, um eine gute Auflösung des Hautabdrucks 21 zu realisieren.

Eine homogene Beleuchtung wird dadurch realisiert, dass vorkollimierte LED 142 so dicht wie möglich gepackt aneinander gesetzt sind und, wie in Fig. 10 dargestellt, eine erste Einkoppellänge B oder sogar eine zweite Einkoppellänge C zur ausreichenden Durchmischung zur Verfügung haben, um Lichtintensitätsspitzen und damit verbundene lokale Überbelichtung von Hautabdrücken 21 zu vermeiden.

Dadurch überlappen sich insbesondere in horizontaler Richtung die eingekoppelten benachbarten divergenten Strahlenbündel 147 erst nach der ersten Einkoppellänge B an den mit einem Kreis kenntlich gemachten Punkten. Infolgedessen ergibt sich im nachfolgenden Bereich der Lichtleiterschicht 141 eine bessere Verteilung des Lichts. Nach der zweiten Einkoppellänge C überlagern sich die Strahlenbündel 147 der zweiten Nachbarn der LEDs 142, wodurch eine nahezu perfekte Homogenisierung der Beleuchtung realisiert wird.

Je niedriger die Divergenz der LEDs 142 ist, desto besser ist die Auflösung des Hautabdrucks 21, da lokale Objektinformationen auf weniger Bildpunkten (verteilt und gemischt) abgebildet werden. Sind die Strahlenbündel 147 jedoch zu stark eingeschränkt (kollimiert), wird die Auflagefläche 11 ungleichmäßig bzw. im Extremfall stellenweise gar nicht beleuchtet. In diesem Fall ist eine ausreichend große Einkoppellänge B oder B+C notwendig, wobei diese abhängig von dem Mittenabstand A zweier benachbarter LEDs 142 und deren Grad der Vorkollimation ist. Im Normalfall ist eine Einkoppellänge B oder B+C von einigen Millimetern, vorzugsweise zwischen 2 mm und 20 mm, ausreichend, um eine ausreichende Überlappung und Durchmischung der Strahlenbündel 147 zu realisieren.

Bei einer Divergenz von 10° und einem Abstand von 10 mm als Mittenabstand A der LEDs 142, ist eine Einkoppellänge B von 57 mm erforderlich, damit sich die abgestrahlten Strahlenbündel der benachbarten LED überlagern (tan 85°=A/5). Um höheren Homogenitätsanforderungen zu genügen, sollten sich die Halbwertsbreiten (FWHM) der übernächsten LEDs 142 ebenfalls überlagern, bevor deren Licht auf einen aufliegenden Hautabdruck 21 fällt. Dafür müsste die Einkoppellänge 114 mm betragen (tan 85°= A/10). Dies zeigt ebenfalls, dass die LEDs 142 bevorzugt so dicht wie möglich angeordnet sind, d.h. dass der Mittenabstand A der LED 142 so klein wie möglich ist, vor allem wenn durch die Vorkollimationsoptiken 143 eine starke Einschränkung der Lichtkegel realisiert wird, d.h. die FWHM klein ist.

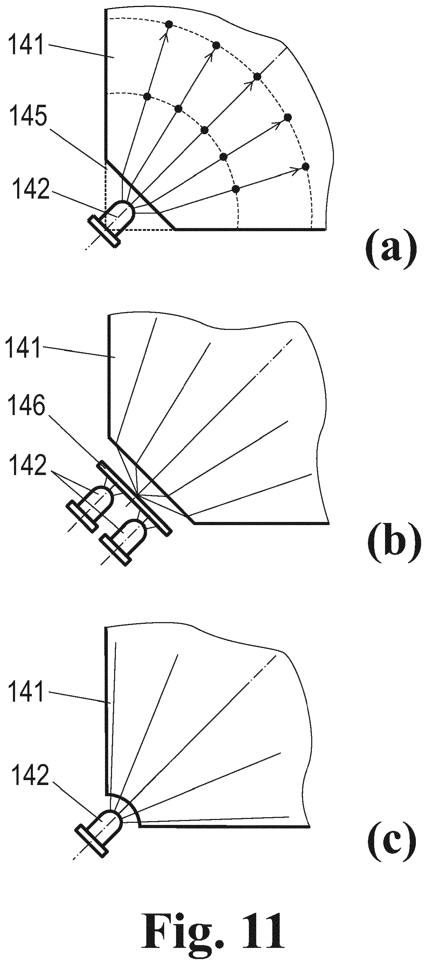

In Fig. 11 sind drei Draufsichten auf weitere Ausführungsdetails der erfindungsgemäßen Vorrichtung mit einer so genannten Eckenlichteinkopplung mit mindestens einer LED gezeigt.

Fig. 11 enthält dazu eine Teilabbildung (a), die eine Ausführungsform der Lichteinkopplung von einer LED 142 in die Lichtleiterschicht 141 in der Draufsicht zeigt, bei der die Lichteinkopplung durch eine LED 142 an wenigstens einer durch Einkürzung einer Ecke der Lichtleiterschicht 141 realisiert ist. Durch eine eingekürzte Ecke 145 wird eine zusätzliche, sehr kurze Schmalseite der Lichtleiterschicht 141 erzeugt, die einen Winkel von 135° mit den üblicherweise vorhandenen Schmalseiten einer rechteckigen Lichtleiterschicht 141 aufweist. Der Vorteil dieser Ausführungsform ist, dass keine Kollimation des Strahlenbündels 147 der LED 142 in horizontaler Richtung durch eine Vorkollimationsoptik 143 (wie in Fig. 9, Abbildungen (c) und (d) gezeigt) notwendig ist. Die LED 142 soll dabei bevorzugt mit einem Winkel von +/-45° zu den benachbarten rechtwinkligen Schmalkanten in die Lichtleiterschicht 141 abstrahlen. Dabei erzeugt jeder Objektpunkt in horizontaler Richtung nur einen diskreten Bildpunkt, wie in der Teilabbildung (a) anhand der schwarzen Punkte zu sehen, weil es keine Überlagerung verschiedener Strahlenbündel gibt (wie im Gegensatz zu Fig. 9, Abbildung (a) erläutert). Eine Auflösungsverringerung findet lediglich durch die vertikale Divergenz statt (nicht gezeichnet), die jedoch, wie oben bereits beschrieben, aufgrund der geringen Unterschiede der Brechungsindizes zwischen Lichtleiterschicht 141 und benachbarten Adhäsionsschichten 16 und 18 sowie der Neigungswinkel ε der Lichtauskoppelstrukturen 144 stark eingeschränkt werden kann und sogar Divergenzen von unter +/-5° umsetzbar sind. Der Intensitätsabfall des in die Lichtleiterschicht 141 eingekoppelten divergenten Strahlenbündels 147 lässt sich durch einen wachsenden Füllfaktor der Lichtauskoppelstrukturen 144 (aus Größe und Dichte der Lichtauskoppelstrukturen 144) zum Rand hin kompensieren. Die Form, Größe und Dichteverteilung der Lichtauskoppelstrukturen 144 kann dabei, wie in Fig. 3c gezeigt, realisiert und vorzugsweise als trapezförmige oder rechteckige, pultdachförmig ansteigende Flächenelemente ausgeführt sein.

Bei einer so beschaffenen Eckenbeleuchtung können Reflexionen an den Randbereichen der benachbarten Schmalseiten der Lichtleiterschicht 141 nachteilig sein, da hierdurch Doppelbilder entstehen und zu einer Verschlechterung der Auflösung führen. Eine bevorzugte Ausführung ist es daher, dass die Lichtleiterschicht 141 an den weiteren Schmalseiten, an denen kein Licht eingekoppelt wird, absorbierende Beschichtungen aufweisen, die dort auftreffendes Licht absorbieren oder auskoppeln.

In den Teilabbildungen (b) und (c) von Fig. 11 sind gegenüber der Teilabbildung (a) weitere Zusatzmaßnahmen gezeichnet. Dabei ist in Teilabbildung (b) eine Mehrfachanordnung von LEDs 142 gezeigt, wobei die Lichtverteilung bzw. -homogenisierung der in diesem Beispiel vorhandenen zwei LEDs 142 durch eine Streuscheibe 146 verbessert ist, durch die Licht in alle Richtungen gleichmäßig (diffus) abgestrahlt wird. Teilabbildung (c) zeigt ein Gestaltungsbeispiel für die eingekürzte Ecke 145, die als konkaver Bogen ausgeführt ist, sodass alle divergent aus der LED 142 austretenden Strahlen ungebrochen in die Lichtleiterschicht 141 eintreten können, wodurch in der gesamten Lichtleiterschicht 141 Lichtquellenlicht gleichverteilt propagieren und ausgekoppelt werden kann.

Mit den hier beschriebenen Ausführungsformen der Erfindung sind hochauflösende und kontrastreiche Aufnahmen von Hautabdrücken 21 sowie auch von Dokumenten möglich, die auf einer gezielten Auskopplung von Licht aus einer Lichtleiterschicht 141 unter definierten Winkeln für die interne Totalreflexion (TIR) oder aber für den Lichtaustritt zur Dokumentbeleuchtung basieren. Weiterhin sind Blendenstrukturen als Blendenschicht 133 in der Sensorschicht 13 den einzelnen Sensorelementen 131 zugeordnet, die ausschließlich die definiert aus der Lichtleiterschicht 141 ausgekoppelten TIR-Winkelbereiche zur Detektion zulassen. Über zusätzliche Maßnahmen der Sensorsteuerung zur Einstellung elektronischer Shutterfunktionen (Rolling oder Global Shutter) sind weitere Optimierungen der Bildaufnahmen von Hautabdrücken 21 und sicherheitsrelevanten Dokumenten 3 erreichbar.

Bezugszeichen

| | |
|---|---|
| 1 | Schichtkörper |
| 11 | Auflagefläche |
| 12 | Deckschicht |
| 13 | Sensorschicht |
| 131 | lichtempfindliche Elemente |
| 132 | transparente Bereiche |
| 14 | Lichtquelleneinheit |
| 141 | Lichtleiterschicht |
| 141' | (weitere) Lichtleiterschicht |
| 142 | LED |
| 143 | Vorkollimationsoptik |
| 144 | Lichtauskoppelstruktur |
| 145 | eingekürzte Ecke |
| 146 | Streuscheibe |
| 147 | Strahlenbündel |
| 15 | erste Adhäsionsschicht |
| 16 | zweite Adhäsionsschicht |
| 17 | Display |
| 171 | Abschlussschicht |
| 172 | Substrat |
| 173 | Leuchtelementschicht |
| 18 | weitere Adhäsionsschicht |
| 19 | Spektralfilterschicht (Bandpass) |
| 2 | Finger |
| 21 | (aufzunehmender) Hautabdruck |
| 3 | Dokument |
| 4 | Störlicht |
| $\alpha$ | Lichtleitwinkel (des in der Lichtleiterschicht geführten Lichts) |
| $\beta$, $\beta'$ | Beleuchtungswinkel (an der Auflagefläche) |
| $\delta$ | Austrittswinkel (aus der Lichtleiterschicht |
| $\varepsilon$, $\varepsilon'$ | Neigungswinkel (der Lichtauskoppelstruktur) |
| $\Phi$, $\Phi'$ | Reflexionswinkel (der Lichtauskoppelstruktur) |
| $\gamma$ | Brechungswinkel (der Lichtauskoppelstruktur) |

**Patentansprüche**

1. Vorrichtung zur optischen Direktaufnahme von Hautabdrücken, mit einem Schichtkörper (1), der eine Auflagefläche (11), die durch eine Deckschicht (12) des Schichtkörpers (1) gebildet ist, sowie eine Sensorschicht (13) und eine Lichtquelleneinheit (14) enthält, wobei die Sensorschicht (13) in einem Sensorraster angeordnete lichtempfindliche Elemente (131) und transparente Bereiche (132) aufweist, **dadurch gekennzeichnet, dass**

- die Lichtquelleneinheit (14) als Lichtleiterschicht (141) ausgebildet und unterhalb der Sensorschicht (13) angeordnet ist, wobei die Lichtleiterschicht (141) an einer Schmalseite eine Lichteinkopplung mittels LED (142) aufweist,
- die Lichtleiterschicht (141) mit Lichtauskoppelstrukturen (144) versehen ist, die auf Basis eines Neigungswinkels der Lichtauskoppelstrukturen (144) und von Unterschieden der Brechungsindizes zwischen den Nachbarschichten der Lichtleiterschicht (141) bis zur Deckschicht (12) eine gerichtete Lichtauskopplung aus der Lichtleiterschicht (141) unter einem definierten Winkel, der nach Durchlaufen aller Schichten bis zur Deckschicht (12) an der Auflagefläche (11) beim Übergang zu Luft zu interner Totalreflexion (TIR) führt, und mit einem kleinen Divergenzwinkelbereich von $\leq$ +/-15° gestatten, um eine hohe örtliche Auflösung des aufzunehmenden Hautabdrucks (21) zu erreichen,
- zwischen Deckschicht (12) und Sensorschicht (13) eine erste Adhäsionsschicht (15) sowie zwischen Sensorschicht (13) und Lichtleiterschicht (141) eine zweite Adhäsionsschicht (16) vorhanden sind, wobei
- die zweite Adhäsionsschicht (16) einen Brechungsindex aufweist, der mindestens 1 % und höchstens 30 % kleiner als die Brechungsindizes der Lichtleiterschicht (141) und der Sensorschicht (13) ist, deren Brechungsindizes zwischen 1,45 und 1,8 liegen, und
- die erste Adhäsionsschicht (15) einen Brechungsindex aufweist, der mindestens so groß ist wie derjenige der zweiten Adhäsionsschicht (16).

2. Vorrichtung nach Anspruch 1, **dadurch gekennzeichnet, dass** die LED-Lichteinkopplung eine der LED (142) nachgeordnete Vorkollimationsoptik (143) an der Schmalseite der Lichtleiterschicht (141) aufweist, mit der in dem jeweils in die Lichtleiterschicht (141) eingekoppelten Strahlenbündel eine horizontale Divergenz zwischen 2,5° und 30° eingestellt ist, um eine verbesserte Auflösung des aufzunehmenden Hautabdrucks (21) zu erreichen.

3. Vorrichtung nach Anspruch 2, **dadurch gekennzeichnet, dass** die Vorkollimationsoptik (143) ein refraktives optisches Element ist, das an der Schmalseite der Lichtleiterschicht (141) eingearbeitet ist.

4. Vorrichtung nach Anspruch 3, **dadurch gekennzeichnet, dass** die Vorkollimationsoptik (143) in Form einer konvexen oder GRIN-Linse an der Schmalseite der Lichtleiterschicht (141) eingearbeitet ist.

5. Vorrichtung nach Anspruch 3, **dadurch gekennzeichnet, dass** die Vorkollimationsoptik (143) innerhalb der Lichtleiterschicht (141) in Form einer konkaven Linse aus einem Medium mit gegenüber der Lichtleiterschicht (141) niedrigerem Brechungsindex ausgebildet ist.

6. Vorrichtung nach einem der Ansprüche 2 bis 5, **dadurch gekennzeichnet, dass** eine Vielzahl von eng benachbarten LEDs (142) entlang einer Schmalseite der Lichtleiterschicht (141) angeordnet sind, sodass deren Strahlenbündel aufgrund der horizontalen Divergenz nach einer definierten Einkoppellänge (B, C) eine angeglichene Lichtintensität in der Lichtleiterschicht (141) bewirken.

7. Vorrichtung nach Anspruch 1, **dadurch gekennzeichnet, dass** eine Eckenlichteinkopplung mit mindestens einer LED (142) an wenigstens einer durch Einkürzung einer Ecke der Lichtleiterschicht vorhandenen Schmalseite angeordnet ist, wobei ein Intensitätsabfall des in die Lichtleiterschicht (141) eingekoppelten divergenten Strahlenbündels durch einen wachsenden Füllfaktor aus Größe und Dichte der Lichtauskoppelstrukturen (144) kompensiert ist.

8. Vorrichtung nach Anspruch 7, **dadurch gekennzeichnet, dass** eine Streuscheibe zwischen LED und Schmalseite der eingekürzten Ecke (145) der Lichtleiterschicht (141) zur Gleichverteilung des eingekoppelten Lichts in alle Raumwinkel angeordnet ist, sodass kein Lichtabfall an der eingekürzten Ecke (145) benachbarten Schmalseiten der Lichtleiterschicht (141) zu kompensieren ist.

9. Vorrichtung nach Anspruch 1, **dadurch gekennzeichnet, dass** der Brechungsindex der ersten Adhäsionsschicht (15) genauso groß ist wie der Brechungsindex der zweiten Adhäsionsschicht (16) , sodass ein Anteil von Störlicht (4), der infolge von durch Umgebungslicht erzeugter Anregung aus den auf der Auflagefläche (11) aufliegenden Hautbereichen (21) austritt, aufgrund von TIR innerhalb der Deckschicht (12) von einer Ausbreitung in Richtung der Sensorschicht (13) ausgeblendet wird.

10. Vorrichtung nach Anspruch 1, **dadurch gekennzeichnet, dass** der Schichtkörper (1) ein Display (17) zur Darstellung von Nutzerinformationen aufweist, das unterhalb des Lichtleiters (141) angelegt ist.

**11.** Vorrichtung nach Anspruch 10, **dadurch gekennzeichnet, dass** das Display (17) an der Unterseite der Lichtleiterschicht (141) entweder abnehmbar ohne Klebstoffschicht oder mittels einer weiteren niedrigbrechenden Adhäsionsschicht (18) mit einem Brechungsindex, der höchstens so groß ist wie derjenige der zweiten Adhäsionsschicht (16), befestigt ist.

**12.** Vorrichtung nach einem der Ansprüche 1 bis 11, **dadurch gekennzeichnet, dass** die Lichtauskoppelstrukturen so ausgebildet sind, dass nur zwischen 50% und 95% des aus der Lichtleiterschicht (141) ausgekoppelten Beleuchtungslichts beim Übergang zu Luft an der Auflagefläche (11) in der Deckschicht (12) totalreflektierter Lichtanteil sind, während ein verbleibender restlicher Lichtanteil zur Beleuchtung von Dokumenten (3) nutzbar ist.

**13.** Vorrichtung nach einem der Ansprüche 1 bis 12, **dadurch gekennzeichnet, dass** unter der transparenten Lichtleiterschicht (141) eine weitere transparente Lichtleiterschicht (141') angebracht und mit dieser durch eine weitere Adhäsionsschicht (18), die einen niedrigen Brechungsindex wie die erste und zweite Adhäsionsschicht (16) aufweist, verbunden ist.

**14.** Vorrichtung nach Anspruch 13, **dadurch gekennzeichnet, dass** die Lichtleiterschicht (141) und die weitere Lichtleiterschicht (141') die Lichteinkopplung an gegenüberliegenden Schmalseiten des Schichtkörpers (1) aufweisen.

**15.** Vorrichtung nach Anspruch 14, **dadurch gekennzeichnet, dass** die Lichtleiterschicht (141) und die weitere Lichtleiterschicht (141') die Lichteinkopplung an derselben Schmalseite des Schichtkörpers (1) haben und Lichtauskoppelstrukturen (144) mit gleicher Ausrichtung aufweisen, wobei die Lichtleiterschicht (141) und die weitere Lichtleiterschicht (141') Lichtauskoppelstrukturen (144) mit derart unterschiedlichen Neigungswinkeln $\varepsilon$ aufweisen können, soweit diese unterschiedlichen Neigungswinkel $\varepsilon$ jeweils Beleuchtungswinkel $\beta$ erzeugen, die an der Auflagefläche (11) zu Totalreflexion führen.

**Claims**

**1.** A device for the direct optical recording of skin prints, comprising a layered body (1) which includes a placement surface (11), formed by a cover layer (12) of the layered body (1), as well as a sensor layer (13) and a light source unit (14), the sensor layer (13) having light-sensitive elements (131) arranged in a sensor grid and transparent regions (132), **characterised in that**

- the light source unit (14) is designed as a light guide layer (141) and is arranged below the sensor layer (13), the light guide layer (141) having a light coupling by means of LEDs (142) on a narrow side,
- the light guide layer (141) is provided with light outcoupling structures (144) which, on the basis of an angle of inclination of the light outcoupling structures (144) and of differences in the refractive indices between the neighbouring layers of the light guide layer (141) up to the cover layer (12), allow light to be coupled out from the light guide layer (141) in a directed manner at a defined angle, which angle, after passing through all layers up to the cover layer (12), leads to total internal reflection (TIR) at the placement surface (11) at the transition to air, and with a small divergence angle range of $\leq$ +/-15°, in order to achieve a high local resolution of the skin print (21) to be recorded,
- a first adhesive layer (15) is present between the cover layer (12) and the sensor layer (13) and a second adhesive layer (16) is present between the sensor layer (13) and the light guide layer (141), wherein
- the second adhesive layer (16) has a refractive index which is at least 1% and at most 30% smaller than the refractive indices of the light guide layer (141) and the sensor layer (13), the refractive indices of which are between 1.45 and 1.8, and
- the first adhesive layer (15) has a refractive index at least as great as that of the second adhesive layer (16).

**2.** The device according to claim 1, **characterised in that** the LED light coupling includes pre-collimation optics (143) arranged downstream of the LED (142), on the narrow side of the light guide layer (141), by which pre-collimation optics (143) a horizontal divergence of between 2.5° and 30° is set in the beam respectively coupled into the light guide layer (141), in order to achieve an improved resolution of the skin print (21) to be recorded.

**3.** The device according to claim 2, **characterised in that** the pre-collimation optics (143) is a refractive optical element incorporated on the narrow side of the light guide layer (141).

**4.** The device according to claim 3, **characterised in that** the precollimation optics (143) is incorporated in the form of a convex or GRIN lens on the narrow side of the light guide layer (141).

**5.** The device according to claim 3, **characterised in that** the pre-collimation optics (143) within the light guide layer (141) is configured in the form of a concave lens of a medium with a lower refractive index compared to the light guide layer (141).

6. The device according to any one of claims 2 to 5, **characterised in that** a plurality of closely adjacent LEDs (142) are arranged along a narrow side of the light guide layer (141), so that their beams, due to the horizontal divergence, produce an adjusted light intensity in the light guide layer (141) after a defined coupling length (B, C).

7. The device according to claim 1, **characterised in that** a corner light coupling comprising at least one LED (142) is arranged on at least one narrow side present by shortening a corner of the light guide layer, wherein an intensity drop of the divergent beam coupled into the light guide layer (141) is compensated for by a growing fill factor of size and density of the light outcoupling structures (144).

8. The device according to claim 7, **characterised in that** a diffusing disc is arranged between the LED and the narrow side of the shortened corner (145) of the light guide layer (141) for uniform distribution of the coupled light into all solid angles, so that no light drop has to be compensated for at narrow sides of the light guide layer (141) adjacent to the shortened corner (145).

9. The device according to claim 1, **characterised in that** the refractive index of the first adhesive layer (15) is the same as the refractive index of the second adhesive layer (16) , so that a portion of interfering light (4) which, as a result of excitation generated by ambient light, emerges from the skin regions (21) resting on the placement surface (11), is blocked from propagating in the direction of the sensor layer (13) due to TIR within the cover layer (12).

10. The device according to claim 1, **characterised in that** the layered body (1) comprises a display (17) for displaying user information, which is placed below the light guide (141).

11. The device according to claim 10, **characterised in that** the display (17) is attached to the underside of the light guide layer (141) either removably without an adhesive layer or by means of a further low refractive index adhesive layer (18) having a refractive index at most as great as that of the second adhesive layer (16).

12. The device according to any one of claims 1 to 11, **characterised in that** the light outcoupling structures are designed in such a way that only between 50% and 95% of the illumination light coupled out from the light guide layer (141) is totally reflected light when passing to air at the placement surface (11) in the cover layer (12), while a remaining light portion can be used for illuminating documents (3).

13. The device according to any one of claims 1 to 12, **characterised in that** a further transparent light guide layer (141') is disposed under the transparent light guide layer (141) and is bonded thereto by a further adhesive layer (18) having a low refractive index like the first and second adhesive layers (16).

14. The device according to claim 13, **characterised in that** the light guide layer (141) and the further light guide layer (141') have the light coupling on opposite narrow sides of the layered body (1).

15. The device according to claim 14, **characterised in that** the light guide layer (141) and the further light guide layer (141') have the light coupling on the same narrow side of the layered body (1) and have light outcoupling structures (144) with the same orientation, wherein the light guide layer (141) and the further light guide layer (141') can have light outcoupling structures (144) with such different angles of inclination $\varepsilon$, insofar as these different angles of inclination $\varepsilon$ in each case produce illumination angles $\beta$ which lead to total reflection at the placement surface (11).

## Revendications

1. Dispositif pour l'enregistrement optique direct d'empreintes cutanées, comprenant un corps stratifié (1) qui contient une surface de contact (11), formée par une couche de couverture (12) du corps stratifié (1), ainsi qu'une couche de capteur (13) et une unité de source de lumière (14), la couche de capteur (13) présentant des éléments photosensibles (131) disposés dans une trame de capteur et des régions transparentes (132), **caractérisé en ce que**

- l'unité de source de lumière (14) est réalisée sous forme d'une couche de guidage de lumière (141) et est disposée sous la couche de capteur (13), la couche de guidage de lumière (141) ayant un couplage de lumière au moyen de LED (142) sur un côté étroit,
- la couche de guidage de lumière (141) est pourvue de structures de découplage de lumière (144) qui, sur la base d'un angle d'inclinaison des structures de découplage de lumière (144) et de différences d'indices de réfraction entre les couches voisines de la couche de guidage de lumière (141) jusqu'à la couche de couverture (12), produisent une découplage de lumière dirigée depuis la couche de guidage de lumière (141) selon un angle défini, qui, après avoir traversé toutes les couches jusqu'à la couche de couverture (12), conduit à une réflexion interne totale (TIR) sur la surface de contact (11) au niveau de la transition vers l'air, et avec une petite plage d'angles de divergence de ≤ +/-15°, afin d'obtenir une résolution locale élevée de l'empreinte cutanée (21) à enregistrer,

- une première couche adhésive (15) est présente entre la couche de couverture (12) et la couche de capteur (13) et une deuxième couche adhésive (16) est présente entre la couche de capteur (13) et la couche de guidage de lumière (141),

- la deuxième couche adhésive (16) ayant un indice de réfraction qui est inférieur d'au moins 1% et d'au plus 30% aux indices de réfraction de la couche de guidage de lumière (141) et de la couche de capteur (13), dont les indices de réfraction sont compris entre 1,45 et 1,8, et

- la première couche adhésive (15) ayant un indice de réfraction qui est au moins aussi grand que celui de la deuxième couche adhésive (16).

2. Dispositif selon la revendication 1, **caractérisé en ce que** le couplage de lumière à LED présente une optique de précollimation (143) disposée en aval de la LED (142) sur le côté étroit de la couche de guidage de lumière (141), avec lequel une divergence horizontale comprise entre 2,5° et 30° est réglée dans le faisceau respectivement couplé dans la couche de guidage de lumière (141), afin d'obtenir une résolution améliorée de l'empreinte cutanée (21) à enregistrer.

3. Dispositif selon la revendication 2, **caractérisé en ce que** l'optique de précollimation (143) est un élément optique réfractif incorporé sur le côté étroit de la couche de guidage de lumière (141).

4. Dispositif selon la revendication 3, **caractérisé en ce que** l'optique de précollimation (143) est incorporée sous forme d'une lentille convexe ou GRIN sur le côté étroit de la couche de guidage de lumière (141).

5. Dispositif selon la revendication 3, **caractérisé en ce que** l'optique de précollimation (143) à l'intérieur de la couche de guidage de lumière (141) est réalisée sous forme d'une lentille concave constituée d'un milieu ayant un indice de réfraction inférieur à celui de la couche de guidage de lumière (141).

6. Dispositif selon l'une quelconque des revendications 2 à 5, **caractérisé en ce qu'**une pluralité de LED (142) étroitement adjacentes sont disposées le long d'un côté étroit de la couche de guidage de lumière (141), de sorte que leurs faisceaux produisent une intensité lumineuse ajustée dans la couche de guidage de lumière (141) en raison de la divergence horizontale après une longueur de couplage définie (B, C).

7. Dispositif selon la revendication 1, **caractérisé en ce qu'**un couplage de lumière en coin avec au moins une LED (142) est disposé sur au moins un côté étroit présent en raccourcissant un coin de la couche de guide de lumière, où une chute d'intensité du faisceau divergent couplé dans la couche de guide de lumière (141) est compensée par un facteur de remplissage croissant de la taille et de la densité des structures de découplage de lumière (144).

8. Dispositif selon la revendication 7, **caractérisé en ce qu'**un diffuseur est disposé entre la LED et le côté étroit du coin raccourci (145) de la couche de guidage de lumière (141) pour une distribution uniforme de la lumière couplée dans tous les angles solides, de sorte qu'aucune chute de lumière ne doit être compensée sur les côtés étroits de la couche de guidage de lumière (141) adjacents au coin raccourci (145).

9. Dispositif selon la revendication 1, **caractérisé en ce que** l'indice de réfraction de la première couche adhésive (15) est le même que l'indice de réfraction de la deuxième couche adhésive (16), de sorte qu'une partie de la lumière parasite (4), qui émerge des régions de la peau (21) reposant sur la surface de contact (11) en raison de l'excitation générée par la lumière ambiante, est empêchée de se propager vers la couche de capteur (13) en raison de la TIR dans la couche de couverture (12).

10. Dispositif selon la revendication 1, **caractérisé en ce que** le corps stratifié (1) comprend un écran (17) pour afficher des informations d'utilisateur, qui est placée sous le guide de lumière (141).

11. Dispositif selon la revendication 10, **caractérisé en ce que** l'écran (17) est fixé à la face inférieure de la couche de guidage de lumière (141) soit de manière amovible sans couche adhésive, soit au moyen d'une autre couche adhésive (18) à faible indice de réfraction, cet indice de réfraction étant au plus égal à celui de la deuxième couche adhésive (16).

12. Dispositif selon l'une quelconque des revendications 1 à 11, **caractérisé en ce que** les structures de découplage de lumière sont conçues de telle sorte que seulement entre 50 % et 95 % de la lumière d'éclairage découplée de la couche de guidage de lumière (141) est une lumière totalement réfléchie lorsqu'elle passe à l'air au niveau de la surface de contact (11) dans la couche de couverture (12), tandis qu'une partie de lumière restante peut être utilisée pour éclairer des documents (3).

**13.** Dispositif selon l'une quelconque des revendications 1 à 12, **caractérisé en ce qu'**une autre couche transparente de guidage de lumière (141') est disposée sous la couche transparente de guidage de lumière (141) et liée à celle-ci par une autre couche adhésive (18) ayant un faible indice de réfraction comme les première et deuxième couches adhésives (16).

**14.** Dispositif selon la revendication 13, **caractérisé en ce que** la couche de guidage de lumière (141) et l'autre couche de guidage de lumière (141') ont le couplage de lumière sur des côtés étroits opposés du corps stratifié (1).

**15.** Dispositif selon la revendication 14, **caractérisé en ce que** la couche de guidage de lumière (141) et l'autre couche de guidage de lumière (141') ont le couplage de lumière sur le même côté étroit du corps stratifié (1) et ont des structures de découplage de lumière (144) avec la même orientation, la couche de guidage de lumière (141) et l'autre couche de guidage de lumière (141') pouvant présenter des structures de couplage de lumière (144) avec des angles d'inclinaison $\varepsilon$ si différents, dans la mesure où ces angles d'inclinaison $\varepsilon$ différents produisent à chaque fois des angles d'éclairage $\beta$ qui conduisent à une réflexion totale sur la surface de contact (11).

**Fig. 1**

EP 3 627 390 B1

**Fig. 2**

EP 3 627 390 B1

**Fig. 3a**

**Fig. 3b**

**Fig. 3c**

**Fig. 4a**

**Fig. 4b**

Lichtleitwinkel α

Neigungswinkel ε der Struktur

**Fig. 5**

EP 3 627 390 B1

Fig. 6

**Fig. 7**

**Fig. 8**

**Fig. 9**

**Fig. 10**

141

145

142

**(a)**

141

146

142

**(b)**

141

142

**(c)**

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017351901 A1, KIM JAEMIN
- DE 102015115484 B3
- US 20180121701 A1
- WO 2017118030 A1
- US 20180165497 A1
- US 20180128957 A1
- US 20170085813 A1